(19) Europäisches Patentamt
European Patent Office
Office européen des brevets

(11) EP 4 306 319 A1

# (12) EUROPEAN PATENT APPLICATION

published in accordance with Art. 153(4) EPC

(43) Date of publication:
**17.01.2024 Bulletin 2024/03**

(21) Application number: **22767115.3**

(22) Date of filing: **08.03.2022**

(51) International Patent Classification (IPC):
***B32B 27/40*** (2006.01) ***C08F 290/00*** (2006.01)
***C08F 290/14*** (2006.01) ***C09K 9/02*** (2006.01)
***G02C 7/10*** (2006.01) ***C09D 183/07*** (2006.01)
***C08F 2/44*** (2006.01) ***C09D 7/63*** (2018.01)
***B32B 7/023*** (2019.01) ***G02B 5/23*** (2006.01)

(52) Cooperative Patent Classification (CPC):
**B32B 7/023; B32B 27/40; C08F 2/44; C08F 290/00; C08F 290/14; C09D 7/63; C09D 183/04; C09K 9/02; G02B 5/23; G02C 7/10**

(86) International application number:
**PCT/JP2022/009858**

(87) International publication number:
**WO 2022/191161 (15.09.2022 Gazette 2022/37)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **08.03.2021 JP 2021036754**
**16.04.2021 JP 2021069439**
**04.06.2021 JP 2021094398**

(71) Applicant: **Tokuyama Corporation**
**Shunan-shi, Yamaguchi 745-8648 (JP)**

(72) Inventors:
- **HANASAKI, Taichi**
**Shunan-shi, Yamaguchi 745-8648 (JP)**
- **MIYAZAKI, Masayuki**
**Shunan-shi, Yamaguchi 745-8648 (JP)**
- **HIRAREN, Toshimitsu**
**Shunan-shi, Yamaguchi 745-8648 (JP)**
- **MORI, Katsuhiro**
**Shunan-shi, Yamaguchi 745-8648 (JP)**
- **MOMODA, Junji**
**Shunan-shi, Yamaguchi 745-8648 (JP)**

(74) Representative: **Kraus & Weisert Patentanwälte PartGmbB**
**Thomas-Wimmer-Ring 15**
**80539 München (DE)**

## (54) PHOTOCHROMIC CURABLE COMPOSITION

(57) The present invention provides: a photochromic curable composition for providing a cured product having excellent durability and appearance; and a cured product (photochromic laminate) having a particularly favorable appearance. A photochromic curable composition according to an embodiment includes: (A1) a first hindered amine compound having at least one reactive group selected from the group consisting of a radically polymerizable group and a group reactive with a radically polymerizable group; (B) a radically polymerizable monomer comprising a polyrotaxane component (B1) having a radically polymerizable group while not having a piperidyl group; and (C) a photochromic compound.

Fig. 1

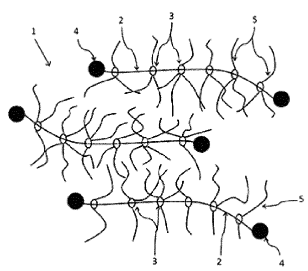

EP 4 306 319 A1

## Description

Technical field:

The present invention relates to a novel photochromic curable composition. The present invention relates further to a novel photochromic laminate obtained by laminating a cured product of the photochromic curable composition.

Background art:

Photochromic compounds represented by chromene compounds, fulgide compounds, spirooxazine compounds and the like have photochromic properties. Namely, these compounds change their colors quickly when irradiated with light including ultraviolet rays such as sunlight or light of a mercury lamp, and then, returns to the original color after the light irradiation is stopped and the compounds are kept in the dark. The photochromic compounds have been used in various applications, particularly in optical materials, taking advantage of the properties.

For instance, photochromic eyeglasses containing a photochromic compound are functional eyeglasses that are quickly colored and function as sunglasses outdoors irradiated with sunlight, and the glasses are faded to function as colorless transparent eyeglasses indoors where there is no irradiation of sunlight. The demand for the photochromic glasses has been increasing in recent years.

Examples of methods for manufacturing a photochromic optical article having a lens for photochromic glasses include a kneading method, a binder method, and a coating method (Patent Documents 1, 2 and 3) . In the kneading method, a photochromic optical article such as a lens is molded by polymerizing a polymerizable composition containing a polymerizable monomer and a photochromic compound. In the binder method, a pair of optical sheets are bonded with an adhesive layer containing a photochromic compound, and the obtained laminate is processed into a lens or the like to obtain a photochromic optical article.

Among the aforementioned methods, the coating method can impart higher productivity. In the coating method, first, a curable composition containing a photochromic compound and a polymerizable monomer is coated on the surface of a lens or the like by spin coating or the like to form a coating film. By curing this coating film, a laminate with a photochromic resin layer formed on the lens surface is obtained. The laminate can be used as a photochromic optical article. In the coating method, a hindered amine compound may be compounded into the curable composition in order to improve the durability of the cured product.

As for a photochromic optical article such as a photochromic lens obtained by the coating method, a protective film may be attached to the surface of the photochromic resin layer. Specifically, in the process of manufacturing an optical instrument such as photochromic sunglasses using the photochromic lens as a component, and in the storage and shipment of the manufactured optical instrument, the photochromic resin layer of the lens may be scratched or dust may adhere thereto . By covering the surface of the photochromic resin layer of the lens with a protective film, the problems of scratches and adhesion of dust can be prevented. Further, a colored film may be used as the protective film. Since the photochromic lens is colorless and transparent when not irradiated with ultraviolet rays, the colored protective film attached to the surface thereof may function as an identification label. As a protective film, for instance, a general-purpose protective film having an acrylic adhesive on the adhesive surface is used.

Prior art documents:

Patent documents:

[Patent Document 1] WO2012/176439
[Patent Document 2] WO2013/099640
[Patent Document 3] WO2015/068798
[Patent Document 4] WO2011/125956
[Patent Document 5] WO2013/058218

Summary of the invention:

Problem to be solved by the invention:

It is the object of the present invention to provide a photochromic curable composition for providing a cured product excellent in durability and appearance.

Means for solving problems:

The object of the present invention is achieved by the following embodiments.

1. A photochromic curable composition comprising:

(A1) a first hindered amine compound having at least one reactive group selected from the group consisting of a radically polymerizable group and a group reactive with a radically polymerizable group,
(B) a radically polymerizable monomer comprising a polyrotaxane component (B1) having a radically polymerizable group while not having a piperidyl group, and
(C) a photochromic compound.

2. The photochromic curable composition according to the above 1., comprising 0.1 parts by mass or more and 5.0 parts by mass or less of the first hindered amine compound (A1) relative to 100 parts by mass of the radically polymerizable monomer component (B).
3. The photochromic curable composition according to the above 1. or 2., wherein a ratio M1/M2 of mass M1 of the polyrotaxane component (B1) to mass M2 of the first hindered amine compound (A1) is 0.1 or more and 40 or less.
4. The photochromic curable composition according to any one of the above 1. to 3., wherein the first hindered amine compound (A1) comprises a compound represented by a formula (X) below:

[CF 1]

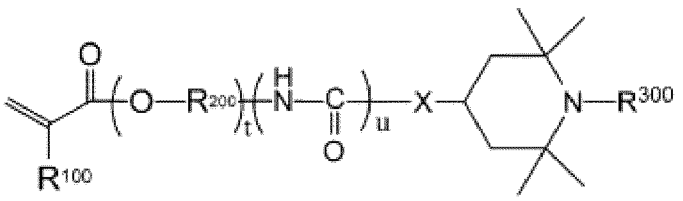
(X)

in the formula (X),

$R^{100}$ and $R^{300}$ are each a hydrogen atom or a methyl group, X is a group represented by a formula (Z) below, $R^{200}$ is an alkylene group having 1 to 5 carbon atoms, t is a number from 0 to 20 on average, and u is a number from 0 to 20 on average,

[CF 2]

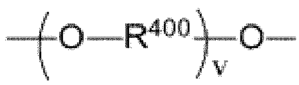
(Z)

in the formula (Z),

$R^{400}$ is an alkylene group having 1 to 20 carbon atoms, and
v is a number from 0 to 20 on average.

5. The photochromic curable composition according to any one of the above 1. to 4., wherein the content of the polyrotaxane component (B1) in the radically polymerizable monomer component (B) is 0.1% by mass or more and 50% by mass or less.
6. The photochromic curable composition according to any one of the above 1. to 5., wherein the radically polymerizable monomer component (B) further comprises silsesquioxane (B2) having a bifunctional or polyfunctional (meth)acryloyl group.
7. The photochromic curable composition according to any one of the above 1. to 6., further comprising a leveling agent.
8. The photochromic curable composition according to any one of the above 1. to 7 ., further comprising a second

hindered amine compound (A2) that has no reactive group.

9. The photochromic curable composition according to any one of the above 1. to 8 ., wherein the second hindered amine compound (A2) comprises a compound represented by a formula (Y) below:

[CF 3]

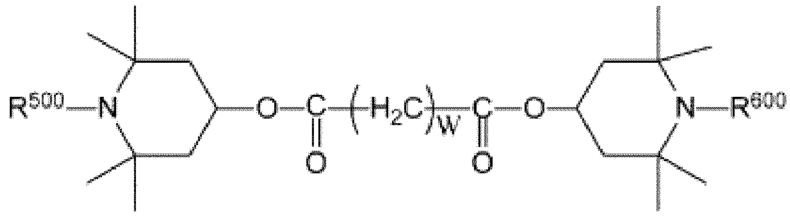

(Y)

in the formula (Y),

$R^{500}$ and $R^{600}$ are each a hydrogen atom or a methyl group, and
W is an integer from 1 to 50.

10. The photochromic curable composition according to any one of the above 1. to 9., further comprising an organic compound (D) having a boiling point of 80°C or higher and 200°C or lower, and a SP value of 8.0 to 10.0.

11. The photochromic curable composition according to any one of the above 1. to 10., comprising 0.10 parts by mass or more and 10.0 parts by mass or less of the organic compound (D) relative to 100 parts by mass of the radically polymerizable monomer component (B).

12. A photochromic laminate comprising:

an optical substrate,
a photochromic resin layer that is a cured product of the photochromic curable composition according to any one of the above 1. to 11., and
a polyurethane resin layer disposed between the optical substrate and the photochromic resin layer.

Effect of the invention:

The present invention provides a photochromic curable composition for providing a cured product excellent in durability and appearance.

Further, a cured product with excellent appearance can be obtained even in a case of reducing the amount of the leveling agent (surfactant) to be blended for effectively preventing appearance defects caused by the scratch-proof protective film. A cured product (photochromic laminate) with particularly favorable appearance can be obtained in a case where the photochromic curable composition is laminated on a urethane resin layer disposed on an optical substrate surface for improving the adhesion.

Brief description of the drawing(s):

[Fig. 1] is a schematic view showing a molecular structure of a polyrotaxane component.

Mode for carrying out the invention:

A photochromic curable composition according to the embodiment includes: a first hindered amine compound (A1); a radically polymerizable monomer (B) containing a polyrotaxane component (B1) having a radically polymerizable group while not having a piperidyl group; and a photochromic compound (C) . The first hindered amine compound (A1) has at least one reactive group selected from the group consisting of a radically polymerizable group and a group reactive with a radically polymerizable group.

By using the photochromic curable composition according to the embodiment, a cured product having high photochromic properties is obtained. This product is excellent also in durability and appearance, capable of preventing or reducing wrinkle-like fine streaks or the like. As a result, a photochromic optical article having excellent durability and appearance can be obtained. The inventors consideration of this reason will be described below.

In a case where the aforementioned protective film is attached to the photochromic resin layer, the photochromic optical article may have problems, for instance, a desired color tone may not be obtained, or appearance defects such

as a wrinkle-like streak may be found. More specifically, after the protective film is removed from the photochromic optical article, the pressure-sensitive adhesive and the colorant contained in the protective film may be stuck to the surface of the photochromic resin layer. When the pressure-sensitive adhesive and the colorant unfavorably remain on or permeate the photochromic resin layer, the color tone of the photochromic resin layer may change from the desired color tone. In addition, fine wrinkle-like streaks may be formed inside the photochromic resin layer.

The present inventors have found that the fine wrinkle-like streaks are caused by the adhesive applied to the adhesive plane of the protective film. In other words, it is considered that the acrylic adhesive used for the protective film permeates from the adhesive plane of the protective film into the photochromic resin layer so as to be cured inside the photochromic resin layer, thereby causing the pattern seemed like streaks or stripes.

As a result of further intensive studies by the present inventors, it has been found that permeation of the acrylic adhesive occurs under the influence of the hindered amine compound. For the hindered amine compound in a curable composition, usually, bis(1,2,2,6,6-pentamethyl-4-piperidyl) sebacate is used. Since the hindered amine compound is capable of scavenging free radicals generated by ultraviolet rays, it can prevent or retard deterioration of the cured product. However, the hindered amine compound may be isolated from the resin of the cured product and bleed out to the surface. Therefore, if the hindered amine compound is present on the surface of the cured product as described above, a component of the adhesive in the protective film tends to be easily taken into the photochromic resin layer. As a result, use of the conventional hindered amine compound may enhance the durability of the cured product, but this may cause the foreign matters like the fine streaks or stripes derived from the protective film, which is found inside the photochromic resin layer.

When a curable composition containing no conventional hindered amine compound is used, a photochromic resin layer free from the fine wrinkle-like streaks can be obtained. However, a photochromic resin layer formed from the curable composition may have inferior durability, and in some cases, discoloration may occur.

The photochromic curable composition according to the embodiment comprises a hindered amine compound (A1) having at least one reactive group selected from the group consisting of a radically polymerizable group and a group reactive with a radically polymerizable group. The radically polymerizable group or the group reactive therewith in the component (A1) reacts with the component (B) at the curing of the curable composition. In the cured product of this composition, it is considered that the component (A1) and at least a part of the component (B) are in the form of a polymerized complex. It is considered that since the component (A1) in the complex is polymerized with the component (B), bleed-out to the surface of the photochromic resin layer is reduced. The photochromic curable composition according to the embodiment contains a polyrotaxane component (B1) having a radically polymerizable group. The component (B1) rarely hinders the structural change of the photochromic compound in the cured product, and thus, it enhances the photochromic properties of the cured product. In addition, the component (B1) contribute to increasing the viscosity of the photochromic curable composition and forming a coating film of a desired thickness. Since the photochromic curable composition according to the embodiment contains the component (A1) and the component (B1), it is possible to provide a photochromic resin layer that can reduce bleed-out of the hindered amine compound and that is excellent in photochromic properties. This photochromic resin layer is hardly affected by an adhesive and a colorant contained in the protective film to be attached to a surface. Therefore, by using the photochromic curable composition according to the embodiment, a photochromic resin layer having high photochromic properties and excellent appearance (i.e., wrinkle-like streaks or the like is rarely formed) can be provided.

Hereinafter, the respective components will be described.

Component (A) (hindered amine component (A))

The component (A) is a hindered amine component having a piperidyl group, comprising a first hindered amine compound (A1) (component (A1)) having at least one reactive group selected from the group consisting of a radically polymerizable group and a group reactive with a radically polymerizable group.

The component (A) may comprise a second hindered amine compound (A2) (component (A2)) other than the component (A1). Both the component (A1) and the component (A2) are compounds having a piperidyl group.

Component (A1)

The component (A1) is a hindered amine compound having at least one reactive group selected from the group consisting of a radically polymerizable group and a group reactive with a radically polymerizable group. By using this component, the stability of the photochromic curable composition itself and the stability of the photochromic optical article can be kept high, whereby a photochromic optical article with favorable appearance can be obtained.

Examples of the radically polymerizable group in the component (A1) include a (meth) acrylic group (methacrylic group, and/or acrylic group) and a vinyl group. And examples of the group reactive with a radically polymerizable group include a thiol group, an amino group, and an epoxy group. These reactive groups are groups to polymerize or react

with the component (B) described in detail below. That is, the component (A1) is chemically bonded in the matrix of the photochromic optical article (resin layer containing the photochromic compound). Since the component (A1) is present in a state bonded to the matrix, the stability of the photochromic curable composition itself and the stability of the photochromic optical article can be kept high, whereby a photochromic optical article with a favorable appearance can be obtained.

The component (A1) is not particularly limited as long as it is a compound having a piperidyl group and at least one reactive group selected from the group consisting of a radically polymerizable group and a group reactive with a radically polymerizable group. The following compounds are preferred. Specifically, a compound represented by a formula (X) below (hereinafter, this may be referred to as component (A1X)) is preferred.

[CF 4]

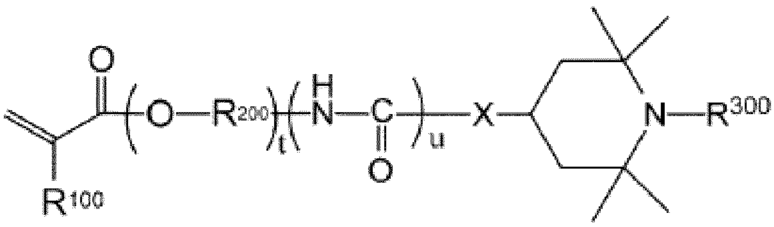

(X)

In the formula (X),

$R^{100}$ and $R^{300}$ are each a hydrogen atom or a methyl group,
X is a group represented by a formula (Z) below,
$R^{200}$ is an alkylene group having 1 to 5 carbon atoms,
t is a number from 0 to 20 on average, and
u is a number from 0 to 20 on average.

[CF 5]

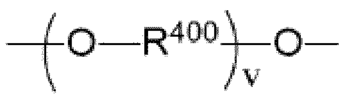

(Z)

In the formula (Z),

$R^{400}$ is an alkylene group having 1 to 20 carbon atoms, and
v is a number from 0 to 20 on average.

In the above formulae, t, u and v are shown as average values because they are often obtained as a mixture in the production process.

In the formula (X), $R^{300}$ is preferably a methyl group; $R^{100}$ is a hydrogen atom or a methyl group.

X is a divalent group represented by the formula (Z) . In the formula (Z), $R^{400}$ is an alkylene group having 1 to 20 carbon atoms, and the alkylene group may be linear or branched. Particularly preferably, $R^{400}$ is a linear or branched alkylene group having 1 to 10 carbon atoms, and more preferably, a linear or branched alkylene group having 1 to 3 carbon atoms. In order to exhibit excellent effects, v is preferably smaller, and is preferably a number from 0 to 10 on average, and more preferably, a number from 0 to 5 on average.

$R^{200}$ is an alkylene group having 1 to 10 carbon atoms, and the alkylene group may be linear or branched. In order to exhibit excellent effects, a linear or branched alkylene group having 1 to 5 carbon atoms is further preferred. In order to exhibit excellent effects, t is preferably smaller, and preferably, t is a number from 0 to 10 on average, and more preferably, a number from 0 to 5 on average; or t may be 2 to 3.

In the above formula, u is a number from 0 to 20 on average. In order to exhibit excellent effects, u is preferably smaller, and preferably, u is a number from 0 to 3 on average, and more preferably a number from 0 to 2 on average; or u may be 1.

The component (A1X) is a known compound, and a commercially available product can be used therefor.

Specifically, the component can be synthesized according to the method described in Patent Document 5. Further, as for the compound where t, u, and v are 0, namely, where X is an oxygen atom, a commercially available product can be used. Specific examples thereof include LA-82 and LA-87 manufactured by ADEKA CORPORATION.

Among the examples of component (A1X), particularly preferred is a compound in which $R^{100}$ and $R^{300}$ are methyl groups, and t, u and v are 0 (X is an oxygen atom), as a compound exhibiting particularly excellent effects.

A specifically preferred example of component (A1X) is 1,2,2,6,6,-pentamethyl-4-piperidyl methacrylate. The 1,2,2, 6, 6, -pentamethyl-4-piperidyl methacrylate as an example of the component (A1X) can keep the stability of the photochromic curable composition itself and the stability of the photochromic optical article at a high level even if the compounding amount is relatively small. Since the component can exhibit excellent effects even if the compounding amount is small, a combination with the component (A2) described in detail below can keep high photochromic properties, and can prevent and reduce sufficiently the appearance defects derived from the scratch-proof protective film. Furthermore, probably since the 1,2,2,6, 6-pentamethyl-4-piperidyl methacrylate is a liquid at ordinary temperature and it has high compatibility with the component (B) described in detail below, it exhibits excellent effects.

Component (A2)

The component (A2) is a second hindered amine compound other than the component (A1), which has a piperidyl group. As the component (A2), any known compound can be used. It is believed that unlike the component (A1), this component (A2) is present dispersed in the matrix of the photochromic optical article. Use of this component (A2) in combination with the component (A1) can relatively reduce the compounding amount in comparison with a case of using the component (A2) alone. And use of the component (A2) can keep high stability of the photochromic curable composition itself and the high stability of the photochromic optical article. The component (A2) is considered as useful also for exhibiting excellent photochromic properties since the compounding amount of the component (A1) can be reduced.

Although the component (A2) is not particularly limited, it is preferable to use a compound represented by a formula (Y) below (hereinafter, this may be simply referred to as "component (A2Y)") .

[CF 6]

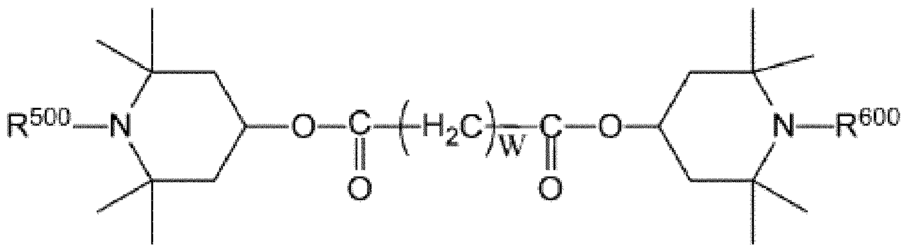

(Y)

In the formula (Y),
$R^{500}$ and $R^{600}$ are each a hydrogen atom or a methyl group, and W is an integer from 1 to 50.

As for the components (A2Y), bis(1,2,2,6,6-pentamethyl-4-piperidyl)sebacate is preferred. In this component, $R^{500}$ and $R^{600}$ are methyl groups and w is 8. In a case of using the component (A2Y), the component (A2) that can be used here contains bis(1,2,2,6,6-pentamethyl-4-piperidyl)sebacate as the component (A2Y) and (1,2,2,6,6-pentamethyl-4-piperidyl)sebacate that is inevitably contained therein. In this case, the compounding amount of the component (A2) may be based on the total amount of the bis (1,2,2,6,6-pentamethyl-4-piperidyl)sebacate and the (1,2,2,6,6-pentamethyl-4-piperidyl)sebacate. Needless to note, the (1,2,2,6,6-pentamethyl-4-piperidyl)sebacate corresponds to the component (A2) other than the component (A2Y) .

The component (A2) preferably contains the component (A2Y) . The component (A2) may consist of the component (A2Y), or it may consist of the component (A2Y) and (1,2,2,6,6-pentamethyl-4-piperidyl)sebacate. Further, it may contain the component (A2Y) and another component (A2) that is neither the component (A2Y) nor (1,2,2,6,6-pentamethyl-4-piperidyl)sebacate. Alternatively, the component (A2) may contain the component (A2Y), the (1,2,2,6,6-pentamethyl-4-piperidyl)sebacate, and any component (A2) other than these components. In order to exhibit further favorable effects, in the aspect, the component (A2) may contain bis(1,2,2,6,6-pentamethyl-4-piperidyl)sebacate as the component (A2Y), and it may contain (1,2,2,6,6-pentamethyl-4-piperidyl)sebacate.

The component (A2Y) is bis(1,2,2,6,6-pentamethyl-4-piperidyl)sebacate that can exhibit excellent properties. For instance, the stability of the photochromic curable composition itself and the stability of the photochromic optical article are kept high, and excellent photochromic properties and excellent appearance can be exhibited. In addition, it is considered that since the component (A2) based on bis(1,2,2,6,6-pentamethyl-4-piperidyl)sebacate (component (A2Y))

is a liquid at ordinary temperature and is highly compatible with the component (B) described in detail below, it is considered as capable of exhibiting excellent effects.

Suitable compounding ratio of component (A1)

Although there is no particular limitation on the compounding amount of the component (A1), the following compounding amount is preferred. Specifically, the content of the component (A1) is preferably 0.1 parts by mass or more and 5.0 parts by mass or less relative to 100 parts by mass of the radically polymerizable monomer component (B) described in detail below. When the amount falls within this range, favorable photochromic properties and repetition durability can be imparted and the storage stability can be improved. For further improving the storage stability, the amount is preferably 0.5 parts by mass or more and 4.0 parts by mass or less, and further preferably 1.0 parts by mass or more and 3.5 parts by mass or less. In order to exhibit a particularly excellent effect, the compounding amount of the component (A1) is preferably set to 1.0 parts by mass or more and 3.0 parts by mass or less, more preferably 1.0 parts by mass or more and less than 3.0 parts by mass, and still more preferably 1.0 parts by mass or more and 2.8 parts by mass or less, relative to 100 parts by mass of the component (B).
In a case of using a single type of the component (B), the amount of the component (B) is set to 100 parts by mass. In fact, however, preferably the component (B) is used as a radically polymerizable composition (B') comprising a plurality of radically polymerizable monomers (composition (B')), as described below. In a case of using the composition (B') for the component (B), the total amount of the plural components (B) (amount of component (B')) is set to 100 parts by mass.

Suitable blending ratio of component (A1) to component (A2) in the component (A)

In a case where the photochromic curable composition according to the embodiment comprises the component (A2), that is, comprises the component (A) as a mixture of the component (A1) and the component (A2), the compounding ratio thereof is preferably as follows. Specifically, the component (A) may contain the component (A2) in an amount of 10 parts by mass or more and 500 parts by mass or less when the component (A1) is 100 parts by mass. When the amount is within the range, favorable repetition durability can be imparted. Further, in view of photochromic properties, storage stability and other properties, it is preferable to contain 10 parts by mass or more and 300 parts by mass or less of the component (A2), more preferably 10 parts by mass or more and 200 parts by mass or less, still more preferably 20 parts by mass or more and 200 parts by mass, and particularly preferably 25 parts by mass or more and 200 parts by mass or less, relative to 100 parts by mass of the component (A1). In particular, in a case where a component (D) described in detail below is included, it is most preferable that the component (A) contains 25 parts by mass or more and 150 parts by mass or less of the component (A2) when the component (A1) is set to 100 parts by mass. In a case where the component (D) described in detail below is not contained, it is most preferable that the component (A) contains 25 parts by mass or more and 150 parts by mass or less of the component (A2) when the component (A1) is set to 100 parts by mass.
However, when the photochromic curable composition according to the embodiment contains the component (A2), fine wrinkle-like streaks as described above may often be formed in the cured product. Therefore, from the viewpoint of obtaining a cured product excellent in appearance, the content of the component (A2) is preferably low, and more preferably not contained. Specifically, when the component (A1) is set to 100 parts by mass, the amount of the component (A2) is preferably 150 parts by mass or less, more preferably 100 parts by mass or less, and still more preferably 75 parts by mass or less. The lower limit of the component (A2) is 0 parts by mass.
The amounts of the component (A1) and the component (A2) to be compounded can be checked by the following method, for instance. In a case of calculating the amounts of these components from the cured product as a photochromic resin layer or the curable composition, the cured product or the curable composition is dissolved first in an organic solvent to obtain a sample. This sample is purified by gel filtration column chromatography or the like to isolate the component (A1) and the component (A2). The isolated component (A1) and the component (A2) are analyzed by $^1$H-NMR spectrometry, liquid chromatography mass (LC-MS) spectrometry, and gas chromatography mass spectroscopy (GC-MS), so that the structures of the component (A1) and the component (A2) can be identified and the respective contents can be figured out.

<Component (B): radically polymerizable monomer (Composition (B): radically polymerizable monomer composition)>

The component (B) is not particularly limited, and any radically polymerizable monomer for an ordinary coating solution can be used. Specifically, it is preferable to contain a polyfunctional (meth)acrylate having at least 2 (meth)acrylate groups in a molecule. The component (B) contains a polyrotaxane component (B1) having a radically polymerizable group. The component (B1) preferably has a weight average molecular weight of 100,000 or more and 1,000,000 or less.

Further, it is preferable that the component (B) further contains a silsesquioxane component (B2) having a weight average molecular weight of 1500 or more and 20,000 or less and having a radically polymerizable group. When the component (B) (composition (B')) comprises at least one of the component (B1) and the component (B2), the thus obtained cured product and laminate exhibit excellent mechanical properties and photochromic properties.
These components will be described further below.

<Component (B1): polyrotaxane component>

The component (B1) preferably has a weight average molecular weight of 100,000 or more and 1,000,000 or less. The radically polymerizable group is preferably a (meth)acrylate group (a methacrylate group, an acrylate group, or both in some cases).
The component (B1) is a known compound having a structure as shown in Fig. 1. Fig. 1 is a schematic diagram showing the component (B1). For the axial molecule 2 in the component (B1), various types of molecules are known. For instance, the axial molecule 2 may be linear or branched as long as it can penetrate the rings formed by the cyclic molecules 3, and usually the axial molecule 2 is formed of a polymer.
Examples of the polymer suitable for the axial molecule in the component (B1) include polyethylene glycol, polyisoprene, polyisobutylene, polybutadiene, polypropylene glycol, polytetrahydrofuran, polydimethyl siloxane, polyethylene, polypropylene, polyvinyl alcohol, and polyvinyl methyl ether. Among them, polyethylene glycol is most suitable.
Further, the groups to be formed at both ends of the axial molecule are not particularly limited as long as the groups can prevent the cyclic molecules from falling off the axial molecule, but preferably, they are bulky groups (bulky terminal groups 4 in Fig. 1) . Examples of the group include an adamantyl group, a trityl group, a fluoresceynyl group, a dinitrophenyl group, and a pyrenyl group. An adamantyl group is particularly suitable from the viewpoint of easy introduction, for instance.
The molecular weight of the axial molecule is not particularly limited. However, if the molecular weight is too large, compatibility with other components, e.g., other polymerizable monomers and the like, tends to deteriorate. If the molecular weight is too small, mobility of the cyclic molecules tends to decrease and the photochromic properties tends to deteriorate. From the viewpoint, it is suitable that the weight average molecular weight Mw of the axial molecule is in the range of 1,000 to 100,000, particularly 5, 000 to 80,000, and particularly preferably 8,000 to 30,000. The weight average molecular weight Mw is a value measured by GPC measuring method in Examples described later.
The cyclic molecules are not particularly limited as long as they make rings with a size to allow clathrate of the axial molecule as described above, and examples of the cyclic molecules include a cyclodextrin ring, a crown ether ring, a benzocrown ring, a dibenzocrown ring and a dicyclohexanocrown ring. Particularly, a cyclodextrin ring is preferred. The cyclodextrin ring includes an $\alpha$-form (ring inner diameter: 0.45 to 0.6 nm), a $\beta$-form (ring inner diameter: 0.6 to 0.8 nm), and a $\gamma$-form (ring inner diameter: 0.8 to 0.95 nm) . Particularly, an $\alpha$-cyclodextrin ring and a $\gamma$-cyclodextrin ring are preferred, and an $\alpha$-cyclodextrin ring is most preferred.
A plurality of the cyclic molecules each having a ring as described above are clathrately contained in one axial molecule, but generally, when the maximal clathrate number of cyclic molecules capable of clathrate inclusion per axial molecule is set to 1, the number of clathrate of cyclic molecules is preferably in the range of 0.001 to 0.6, more preferably 0.002 to 0.5, and still more preferably 0.003 to 0.4. When the number of clathrate of the cyclic molecule is too large, since the cyclic molecules are densely present with respect to one axial molecule, the mobility thereof tends to be lowered and the photochromic properties of the cured product tends to be lowered. When the number of clathrates is too small, the space between the axial molecules becomes narrow, and the flexibility to allow reversible reaction of the photochromic compound molecules decreases, and thus, the photochromic properties of the cured product tend to be lowered.
The component (B1) is a polyrotaxane compound prepared by introducing side chains into the cyclic molecules, where the side chains have hydroxyl groups at the terminals, and the hydroxyl groups of the side chains are denatured with a compound having a radically polymerizable group. In Fig. 1, the side chains are indicated as "5".
The side chain having hydroxyl groups at the terminals is not particularly limited, but preferably, it is a side chain that has hydroxyl groups at the terminals and that is formed of repeated organic chains having 3 to 20 carbon atoms. The average molecular weight of the side chains may range from 300 to 10,000, preferably from 350 to 8,000, more preferably from 350 to 5,000, and most preferably from 400 to 1,500. The average molecular weight of this side chain can be adjusted by the use amount at the time of introduction of the side chain, and can be calculated. Alternatively, it can be determined from the result of $^1$H-NMR measurement.
The aforementioned side chains having hydroxyl groups at terminals may be introduced by using the functional groups of the cyclic molecules and modifying the functional groups. For instance, the $\alpha$-cyclodextrin ring has 18 hydroxyl groups as functional groups, and the side chains are introduced via the hydroxyl groups. In other words, up to 18 side chains can be introduced per $\alpha$-cyclodextrin ring. In order to sufficiently exhibit the function of the side chain described above, it is preferable that 6% or more, particularly 30% or more of the total number of functional groups of the ring are modified with the side chains. The functional groups of the cyclic molecules may affect compatibility with other components. In particular, when the functional group is a hydroxyl group, it may impose a great influence on the compatibility with other components. Therefore, the modification ratio of the functional groups (modification degree) is preferably 6% or more and 80% or less, and more preferably 30% or more and 70% or less.

The aforementioned side chain may be linear or branched as long as it has hydroxyl groups at the terminals. A desired side chain can be obtained by utilizing ring-opening polymerization; radical polymerization; cationic polymerization; anionic polymerization; or living radical polymerization such as atom-transfer radical polymerization, RAFT polymerization, and NMP polymerization, thereby introducing a side chain into a functional group of a cyclic molecule so that hydroxyl groups are provided at the terminals.

For instance, a side chain derived from a cyclic compound such as lactone or cyclic ether can be introduced by ring-opening polymerization. The side chain introduced by ring-opening polymerization of the cyclic compound such as lactone or cyclic ether will have a hydroxyl group introduced into the terminals of the side chain.

Among the cyclic compounds, from the viewpoint of availability, high reactivity, and further easy adjustment of size (molecular weight), cyclic ether or a lactone compound is used preferably. A lactone compound is suitably used, and ε-caprolactone is preferred.

In a case of introducing the side chain by reacting the cyclic compound through ring-opening polymerization, poor reactivity of the functional group bonded to the ring (e.g., hydroxyl group) may cause difficulty in direct reaction of large molecules due to steric hindrance or the like. In such a case, for instance, in order to react the caprolactone or the like, hydroxypropylation is performed by reacting a low-molecular weight compound such as propylene oxide with a functional group so that a sufficiently reactive functional group (e.g., a hydroxyl group) is introduced into the terminal. After that, the aforementioned ring-opening polymerization using the ring compound is performed to introduce the side chain. In this case, the hydroxypropylated moiety can also be regarded as a side chain.

As for the component (B1), side chains having hydroxyl groups at the terminals are introduced into the cyclic molecules. For this purpose, the method of introducing the side chains having hydroxyl groups at the terminals by the ring-opening polymerization is employed preferably from the viewpoint of easy introduction of the side chain, easy adjustment of the size (molecular weight) of the side chain and denaturation of the hydroxyl group.

(Component (B1) having polymerizable group at terminal (terminal of side chain))

As for the component (B1), a hydroxyl group at a terminal of a side chain in the polyrotaxane is reacted with a compound having a radically polymerizable group, thereby introducing the polymerizable groups into the terminals of the side chain of the polyrotaxane compound. This reaction is referred to as "denaturation".

The compound having a radically polymerizable group is introduced by utilizing the side chains having hydroxyl groups at the terminals. For this purpose, a compound reactive with the hydroxyl group of the side chain can be used as appropriate. In consideration of compatibility with other components, this compound having a radically polymerizable group is preferably a compound having no hydroxyl group in its molecule. As the radically polymerizable group, a (meth)acrylate group is preferred.

A compound having a radically polymerizable group is a compound having in one molecule both a functional group capable of reacting with a hydroxyl group of a side chain and the polymerizable group. Examples of the functional group capable of reacting with a hydroxyl group include an isocyanate group, a carboxyl group, and an acid chloride group (e.g., a -COCl group). By reacting a compound having an isocyanate group, a radically polymerizable group is introduced via a urethane bond. Alternatively, by reacting a compound having a carboxyl group and an acid chloride group or the like, a radically polymerizable group is introduced via an ester bond.

For the reaction of the compound having a radically polymerizable group with the hydroxyl group at the side chain, conditions for a reaction between a hydroxyl group and a known functional group capable of reacting with a hydroxyl group may be employed.

As for the component (B1), the denaturation ratio of the radically polymerizable group to the hydroxyl group at the terminal of the side chain, that is, the reaction ratio of the compound having the radically polymerizable group to the mole number of the total hydroxyl groups of the side chain is preferably 1 mol% or more and less than 100 mol%. In consideration of the yield, the mechanical strength, the photochromic properties and the like of the obtained cured product, the denaturation ratio by the compound having the radically polymerizable group is more preferably 10 mol% or more and 95 mol% or less, still more preferably 30 mol% or more and 95 mol% or less. And particularly preferably, it is 70 mol% or more and 95 mol% or less in consideration of the productivity of the polyrotaxane compound itself.

The denaturation ratio can be calculated by (mole number with introduced polymerizable group)/(mole number of total hydroxyl group of side chain) × 100. It is also possible that the component (B1) is denatured with a compound having no radically polymerizable group as described in detail below. Therefore, the remaining hydroxyl group of the side chain can also be denatured with a compound having no radically polymerizable group described in detail below. In this case, however, a hydroxyl group may remain since the denaturation ratio is high.

It is essential for the component (B1) that the hydroxyl group at the terminal of the side chain introduced into

the cyclic molecule is denatured with a compound having a radically polymerizable group. The remaining hydroxyl group of the side chain (that is, a hydroxyl group at the terminal of the side chain introduced into the cyclic molecule and not denatured with the compound having a radically polymerizable group) may remain a hydroxyl group or may be denatured with a compound having no radically polymerizable group.

The compound having no radically polymerizable group has, in each molecule, a functional group capable of reacting with a hydroxyl group of a side chain, and a radically polymerizable group is not included in the molecule. Therefore, it is preferable that the compound having no radically polymerizable group has an alkyl group having 2 to 20 carbon atoms, an alkyleneoxy group having 2 to 30 carbon atoms, or an aryl group having 6 to 20 carbon atoms, instead of the radically polymerizable group. Examples of the functional group capable of reacting with the hydroxyl group of the side chain include the same functional groups as those described in the "compound having a radically polymerizable group".

As the compound having no radically polymerizable group, an isocyanate compound having 2 to 20 carbon atoms (excluding carbon atoms of isocyanate group) is preferred as a compound having an isocyanate group, from the viewpoint of availability of a raw material and high reactivity with a hydroxyl group. As the compound having no radically polymerizable group, a carboxylic acid chloride having 2 to 20 carbon atoms (excluding carbon atoms of a carbonyl group) is preferred as a carboxylic acid chloride from the viewpoint of availability of a raw material and high reactivity with a hydroxyl group.

The denaturation ratio of the compound having no radically polymerizable group can be calculated by (mole number of introduced compound having no radically polymerizable group) / (mole number of total hydroxyl group of side chain) $\times$ 100. This denaturation ratio is not particularly limited. In consideration of the yield, mechanical strength, photochromic properties and the like of the obtained cured product, the denaturation ratio for the compound having no radically polymerizable group is preferably set to 0 to 99 mol%, more preferably 5 to 90 mol%, still more preferably 5 to 70 mol%, and particularly preferably 5 to 30 mol%.

(Structure and molecular weight of suitable component (B1))

In the suitably used component (B1) among the respective components mentioned above, preferably, the axial molecule is polyethylene glycol bonded at the both ends with adamantyl groups, the cyclic molecule has an $\alpha$-cyclodextrin ring, and, a side chain having at the terminals hydroxyl groups is introduced by polycaprolactone into the cyclic molecule.

The weight average molecular weight Mw of the component (B1) is preferably in the range of 100,000 to 1,000,000. When the weight average molecular weight Mw of the component (B1) is within this range, compatibility with other components is improved, and transparency of the cured product can be further improved. In view of compatibility with other components, transparency and the like of the cured product, the weight average molecular weight Mw of the component (B1) is more preferably in the range of 100,000 to 800,000, and still more preferably in the range of 100,000 to 500,000. This weight average molecular weight Mw is a value measured by GPC measuring method described in the following Examples.

Particularly suitable component (B1) is as follows. That is, preferably, the molecular weight of the axial molecule is 8,000 to 30,000; the introduction ratio of the $\alpha$-cyclodextrin ring is in the range of 0.003 to 0.4; and the ratio of the modified $\alpha$-cyclodextrin ring (modification degree) is 30% or more and 70% or less. Further, it is preferable that the $\alpha$-cyclodextrin ring has a side chain having an average molecular weight in a range of 400 to 1,500, and a denaturation ratio of (meth)acrylate group in this side chain is set to 70 mol% or more and 95 mol% or less. These numerical values show that the number of (meth)acrylate groups per molecule of the component (B1) in use is preferably 10 to 1000.

<Compounding amount of component (B1)>

The percentage of the component (B1) in the component (B) is preferably 0.1% by mass or more and 50% by mass or less. When the percentage of the component (B1) is large, the photochromic properties of the cured product tends to be enhanced. When the percentage of the component (B1) is small, the appearance of the cured product tends to be improved. The percentage of the component (B1) in the component (B)is more preferably 0.5% by mass or more and 45% by mass or less, and particularly preferably 1.0% by mass or more and 40% by mass or less.

The ratio M1/M2 of mass M1 of the component (B1) to mass M2 of the component (A1) is preferably 0.1 or more and 40 or less. By setting the ratio M1/M2 within this range, a cured product having more favorable appearance can be obtained. The ratio M1/M2 is more preferably 0.3 or more and 30 or less, still more preferably 0.5 or more and 25 or less, and particularly preferably 0.5 or more and 20 or less.

<Component (B2): silsesquioxane component>

The component (B) preferably contains component (B2). The component (B2) is a silsesquioxane component

having a radically polymerizable group, where the weight average molecular weight is 1500 or more and 20,000 or less. The radically polymerizable group is preferably a (meth)acrylate group (a methacrylate group, an acrylate group, or both in some cases) .

The component (B2) is a polyfunctional polymerizable monomer having silicon in its molecule, and any known materials can be used without any particular limitations. A particularly suitable example is silsesquioxane having a plurality of (meth)acrylate groups.

As the component (B2), a component represented by a formula (6) below is included.

[CF 7]

$$\left(R^{15}\text{-}SiO_{3/2}\right)_k \qquad (6)$$

(In the formula, k is a polymerization degree and an integer from 3 to 100; and a plurality of $R^{15}$ may be the same or different from each other, and each is an organic group containing at least two (meth)acrylate groups, provided that $R^{15}$ does not contain a group containing a chain-like organosiloxane group.)

Here, an organic group containing a (meth) acrylate group in $R^{15}$ may include only a (meth) acrylate group (a (meth) acrylate group may be bonded directly to a silicon atom) . Specifically, the (meth) acrylate group may contain not only a (meth) acrylate group but also a (meth)acryloxypropyl group and a (3-(meth)acryloxypropyl)dimethylsiloxy group. Among them, the (meth)acryloxypropyl group is particularly preferred because a raw material therefor can be easily obtained at the time of producing the component (B2), and a high film strength can be obtained while exhibiting excellent photochromic properties.

The weight average molecular weight Mw of the component (B2) is preferably from 1,500 to 20, 000, and the (meth) acrylic equivalent is preferably from 150 to 800. The weight average molecular weight Mw of the component (B2) is a value measured by a gel permeation chromatography (GPC).

The component (B2) preferably contain 10 or more (meth)acrylate groups in one molecule on average. Particularly, 10 to 100 (meth)acrylate groups are preferably contained in one molecule, and further preferably, 15 to 35 (meth)acrylate groups are contained.

The silsesquioxane typically has a variety of molecular structures, such as cage-like, ladder-like, and random. As the component (B2), a compound having one kind of structure may be used as the silsesquioxane, or a mixture of compounds having a plurality of structures may be used as the silsesquioxane. In a case of mixture, the total mass of the mixture is regarded as the compounding amount of the component (B2). Particularly preferably, the component (B2) is a mixture comprising a compound of plurality of structures.

The component (B2) can be produced in accordance with the synthesizing method described in the cited document (see Appl. Organometal. Chem., 2001, p.683-692) and Patent Documents (JP 2004-143449 A and JP 1999-29640 A), for instance.

<Compounding amount of component (B2)>

Although the component (B2) is not an essential component, use of the component (B2) can improve the mechanical properties, photochromic properties and the like. In order to further enhance these effects, it is preferable to set the amount of component (B2) to a range of 0 to 10 parts by mass, more preferably 0.1 to 8 parts by mass, and still more preferably 0.1 to 6 parts by mass when the total amount of the component (B), namely, the amount of the composition (B') is set to 100 parts by mass.

Although the component (B1) and the component (B2) are not essential components, a photochromic curable composition containing at least one of them has excellent photochromic properties and physical properties, and particularly it exhibits an effect of preventing or reducing wrinkle defects described in detail below. As a result, the effect due to the component (A) is further exhibited. It is preferable to contain both the component (B1) and component (B2) to exhibit further the effects of the component (A) and to produce a photochromic optical article having excellent photochromic properties and physical properties while preventing or reducing the wrinkle defects.

It is preferable that the component (B) contains the other radically polymerizable monomer component (B3) that is neither the component (B1) nor the component (B2).

Hereinafter, the other radically polymerizable monomer component (B3) (this may be simply referred to as component (B3)) will be described.

<Component (B3): other radically polymerizable monomer component>

The component (B) is preferably a composition (B') comprising plural kinds of radically polymerizable monomers. It is preferable that the composition (B') contains a component (B3) in addition to the component (B1) and the component (B2) . The radically polymerizable group of the component (B3) is preferably a (meth)acrylate group. It is particularly preferable that the component (B3) contains the following two components.

A bifunctional (meth)acrylate (B31) having 2 (meth)acrylate groups in its molecule (hereinafter, this may be simply referred to as component (B31))

A polyfunctional (meth)acrylate (B32) having 3 or more (meth)acrylate groups in its molecule (hereinafter, this may be simply referred to as component (B32))

A monofunctional (meth)acrylate (B33) having one (meth) acrylate group (hereinafter, this may be simply referred to as component (B33))

These components will be described below.

<Component (B31): bifunctional (meth)acrylate>

It is preferred that the composition (B') contains a component (B31). Specific examples thereof are shown below. Specific examples thereof include a component represented by a formula (1) below (hereinafter, this may be simply referred to as a component (B31a)), a component represented by a formula (2) below (hereinafter, this may be simply referred to as a component (B31b)), and a component represented by a formula (3) below (hereinafter, this may be simply referred to as component (B31c)). Further examples include a bifunctional (meth)acrylate component having a urethane bond (hereinafter, this may be simply referred to as component (B31d)), and a bifunctional (meth)acylate component that does not correspond to any of the component (B31a), the component (B31b), the component (B31c) or the component (B31d) (hereinafter, this may be also referred to as component (B31e)).

These components (B31) will be described below.

<Component (B31a): component represented by a formula (1) below>

[CF 8]

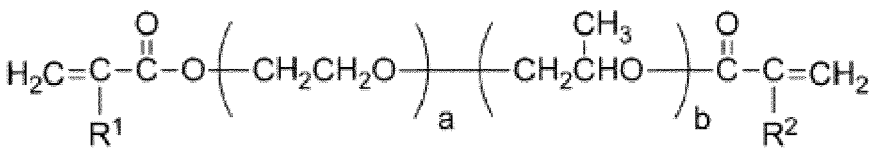

(1)

(In the formula, $R^1$ and $R^2$ are each a hydrogen atom or a methyl group, 'a' and 'b' are each independently an integer of 0 or more, and a+b is an integer of 2 or more.)

Specific examples of the compound represented by the above formula (1) are as follows.

Diethylene glycol dimethacrylate, triethylene glycol dimethacrylate, tetraethylene glycol dimethacrylate, pentaethylene glycol dimethacrylate, pentapropylene glycol dimethacrylate, diethylene glycol diacrylate, triethylene glycol diacrylate, tetraethylene glycol diacrylate, pentaethylene glycol diacrylate, tripropylene glycol diacrylate, tetrapropylene glycol diacrylate, pentapropylene glycol diacrylate, dimethacrylate consisting of a mixture of polypropylene glycol and polyethylene glycol (polyethylene and polypropylene each has two repeating units), polyethylene glycol dimethacrylate (particularly a = 4, b = 0, average molecular weight: 330), polyethylene glycol dimethacrylate (particularly a = 9, b = 0, average molecular weight: 536), polyethylene glycol dimethacrylate (particularly a = 14, b = 0, average molecular weight: 736), tripropylene glycol dimethacrylate, tetrapropylene glycol dimethacrylate, polypropylene glycol dimethacrylate (particularly a = 0, b = 7, average molecular weight: 536), polyethylene glycol diacrylate (particularly, average molecular weight: 258), polyethylene glycol diacrylate (particularly a = 4, b = 0, average molecular weight: 308), polyethylene glycol diacrylate (particularly a = 9, b = 0, average molecular weight: 508), polyethylene glycol diacrylate (particularly a = 14, b = 0, average molecular weight: 708), and polyethylene glycol methacrylate acrylate (particularly a = 9, b = 0, average molecular weight: 522)

<Component (B31b): component represented by a formula (2) below>

[CF 9]

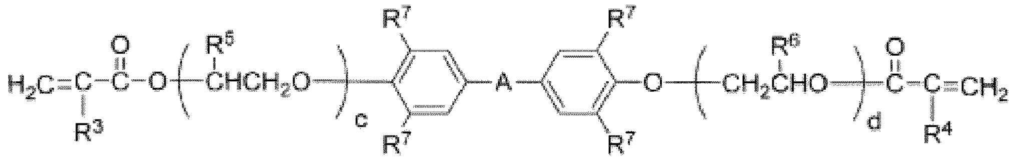

(2)

(In the formula,

$R^3$ and $R^4$ are each a hydrogen atom or a methyl group,
$R^5$ and $R^6$ are each a hydrogen atom or a methyl group,
$R^7$ is a hydrogen atom or a halogen atom,
'A' is -O-, -S-, $-(SO_2)-$, -CO-, $-CH_2-$, -CH=CH-, $-C(CH_3)_2-$, or $-C(CH_3)(C_6H_5)-$,
c and d are each an integer of 1 or more, and c+d is 2 or more and 30 or less on average.) The bifunctional (meth) acrylate represented by the above formula (2) is usually obtained in the form of a mixture of molecules having different molecular weights. Therefore, c and d are indicated as average values.

Specific examples of the bifunctional (meth)acrylate represented by the formula (2) include, for instance, the following bisphenol A di(meth)acrylates.

2,2-bis[4-(methacryloyloxyethoxy)phenyl]propane (c+d=2, average molecular weight: 452)
2,2-bis[4-(methacryloyloxydiethoxy)phenyl]propane (c+d=4, average molecular weight: 540)
2,2-bis[4-(methacryloyloxypolyethoxy)phenyl]propane (c+d=7, average molecular weight: 672)
2,2-bis[3,5-dibromo-4-(methacryloyloxyethoxy)phenyl] propane (c+d=2, average molecular weight: 768)
2,2-bis(methacryloyloxydipropoxy)phenyl)propane (c+d=4, average molecular weight: 596)
2,2-bis[4-(acryloyloxydiethoxy)phenyl]propane (c+d=4, average molecular weight: 512)
2,2-bis[4-(acryloyloxypolyethoxy)phenyl]propane (c+d=3, average molecular weight: 466)
2,2-bis[4-(acryloyloxypolyethoxy)phenyl]propane (c+d=7, average molecular weight: 642)
2,2-bis[4-(methacryloyloxypolyethoxy)phenyl]propane (c+d=10, average molecular weight: 804)
2,2-bis[4-(methacryloyloxypolyethoxy)phenyl]propane (c+d=17, average molecular weight: 1116)
2,2-bis[4-(methacryloyloxypolyethoxy)phenyl]propane (c+d=30, average molecular weight: 1684)
2,2-bis[4-(acryloyloxypolyethoxy)phenyl]propane (c+d=10, average molecular weight: 776)
2,2-bis[4-(acryloyloxypolyethoxy)phenyl]propane (c+d=20, average molecular weight: 1216)

Component (B31c) : component represented by a formula (3) below

[CF 10]

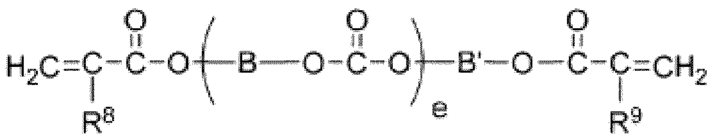

(3)

(In the formula,

$R^8$ and $R^9$ are each a hydrogen atom or a methyl group,
e is a number from 1 to 20 on average,
B and B' may be the same or different from each other, and each is a linear or branched alkylene group having 2 to 15 carbon atoms, and in a case where a plurality of B are present, the plurality of B may be the same or different groups.)

The bifunctional (meth) acrylate represented by the above formula (3) can be produced by reacting polycarbonate diol with (meth)acrylic acid.

Examples of polycarbonate diol used here will be described below. Specific examples include: polycarbonate diol obtained by phosgenation of trimethylene glycol (average molecular weight: 500 to 2000), polycarbonate diol obtained by phosgenation of tetramethylene glycol (average molecular weight: 500 to 2000), polycarbonate diol obtained by phosgenation of pentamethylene glycol (average molecular weight: 500 to 2000), polycarbonate diol obtained by phosgenation of hexamethylene glycol (average molecular weight: 500 to 2000), polycarbonate diol obtained by phosgenation of octamethylene glycol (average molecular weight: 500 to 2000), polycarbonate diol obtained by phosgenation of nonamethylene glycol (average molecular weight: 500 to 2000), polycarbonate diol obtained by phosgenation of triethylene glycol and tetramethylene glycol (average molecular weight: 500 to 2000), polycarbonate diol obtained by phosgenation of tetramethylene glycol and hexamethylene diglycol (average molecular weight: 500 to 2000), polycarbonate diol obtained by phosgenation of pentamethylene glycol and hexamethylene glycol (average molecular weight: 500 to 2000), polycarbonate diol obtained by phosgenation of tetramethylene glycol and octamethylene glycol (average molecular weight: 500 to 2000), polycarbonate diol obtained by phosgenation of hexamethylene glycol and octamethylene glycol (average molecular weight: 500 to 2000), and polycarbonate diol obtained by phosgenation of 1-methyltrimethylene glycol (average molecular weight: 500 to 2000).

Component (B31d) : bifunctional (meth) acrylate having urethane bond

The component (B31d) is typically a reactant of a polyol and a polyisocyanate. Examples of the polyisocyanate include hexamethylene diisocyanate, isophorone diisocyanate, lysine isocyanate, 2,2,4-hexamethylene diisocyanate, dimer acid diisocyanate, isopropylidene bis-4-cyclohexyl isocyanate, dicyclohexylmethane diisocyanate, norbornene diisocyanate, or methylcyclohexane diisocyanate.

Examples of the polyol include: polyalkylene glucols having repeating units of ethylene oxide, propylene oxide, or hexamethylene oxide having 2 to 4 carbon atoms; or polyester diols such as polycaprolactone diol. Further examples include: polycarbonate diol, polybutadiene diol, or pentaerythritol, ethylene glycol, propylene glycol, 1,3-propanediol, 1,4-butanediol, 1,5-pentanediol, 1,6-hexanediol, 1,9-nonanediol, 1,8-nonanediol, neopentyl glycol, diethylene glycol, dipropylene glycol, 1,4-cyclohexanediol, 1,4-cyclohexanedimethanol, glycerin, and trimethylolpropane.

Furthermore, reaction mixtures or the like also can be used. An example thereof is obtained by preparing a urethane prepolymer through a reaction of these polyisocyanates and polyols and further reacting with 2-hydroxy(meth)acrylate. Another example is urethane (meth) acrylate, which is a reaction mixture obtained by directly reacting the diisocyanate with 2-hydroxy(meth)acrylate.

Examples of the bifunctional ingredients include commercially available products such as: U-2PPA (molecular weight: 482), UA-122P (molecular weight: 1100), and U-122P (molecular weight: 1100) manufactured by SHIN-NAKAMURA CHEMICAL Co., Ltd.; EB4858 (molecular weight: 454) manufactured by Daicel UCB; TEAI-1000 and TE-2000 manufactured by NIPPON SODA CO., LTD.; and CN9014 manufactured by Arkema S.A.

Component (B31e): bifunctional (meth)acrylate not corresponding to the aforementioned components

Examples of the component (B31e) are compounds each having (meth)acrylate groups at both terminals of an alkylene group that may have a substituent. Among them, compounds each having an alkylene group having 6 to 20 carbon atoms are preferred. Specific examples thereof include 1,6-hexanediol diacrylate, 1,6-hexanediol dimethacrylate, 1,9-nonanediol diacrylate, 1,9-nonanediol dimethacrylate, 1,10-decanediol diacrylate, and 1,10-decanediol dimethacrylate.

Examples of the component (B31e) also include butadiene di(meth)acrylate represented by a formula (4) below.

[CF 11]

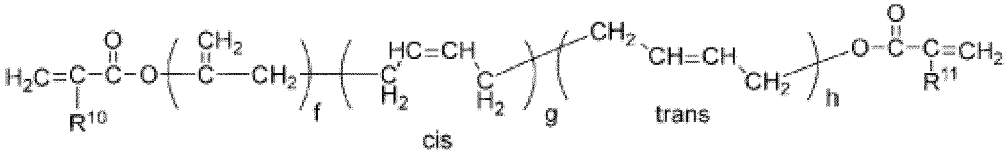

(4)

(In the formula,

$R^{10}$ and $R^{11}$ are each a hydrogen atom or a methyl group;
f, g and h are each independently an integer of 0 or larger; and f+g+h is an integer of 1 or larger.)

The bifunctional (meth) acrylate represented by the above formula (4) is not particularly limited, and examples thereof include butadiene di(meth)acrylate as commercially available products such as BAC-45 manufactured by OSAKA ORGANIC CHEMICAL INDUSTRY LTD. and CN307 manufactured by Arkema S.A.

Examples of the component (B31e) further include bifunctional (meth)acrylate that may contain a sulfur atom. Preferably, the sulfur atom constitutes a part of the molecular chain, as a sulfide group. Specific examples thereof include: bis(2-methacryloyloxyethylthioethyl) sulfide, bis(methacryloyloxyethyl) sulfide, bis(acryloyloxyethyl) sulfide, 1,2-bis(methacryloyloxyethylthio)ethane, 1,2-bis(acryloyloxyethyl) ethane, bis(2-methacryloyl oxyethylthioethyl) sulfide, bis(2-acryloyloxy ethylthioethyl) sulfide, 1,2-bis(methacryloyloxy ethylthioethylthio) ethane, 1,2-bis(acryloyloxy ethylthio ethylthio)ethane, 1,2-bis(methacryloyloxy isopropyl thioisopropyl)sulfide, and 1,2-bis(acryloyloxy isopropyl thioisopropyl)sulfide.

For each of the component (B31a), the component (B31b), the component (B31c), the component (B31d) and the component (B31e), a single component may be used, or plural kinds of components described above may be used. In a case of using plural kinds of components, the mass to make the standard of the component (B31) is the total amount of the plurality of components. Although not particularly limited, when the total amount of the component (B31) is set to 100 parts by mass, preferably the component (B31a) is 30 to 100 parts by mass, the component (B31b) is 0 to 70 parts by mass, the component (B31c) is 0 to 70 parts by mass, the component (B31d) is 0 to 70 parts by mass, and the component (B31e) is 0 to 70 parts by mass . More preferably, the component (B31a) is 40 to 95 parts by mass, the component (B31b) is 5 to 60 parts by mass, the component (B31c) is 5 to 60 parts by mass, the component (B31d) is 5 to 60 parts by mass, and the component (B31e) is 5 to 60 parts by mass.

Hereinafter, polyfunctional (meth)acrylate (B32) will be described.

<Component (B32): polyfunctional (meth)acrylate>

Examples of the component (B32) include a component represented by a formula (5) below (hereinafter, this may be simply referred to as component (B32a)), a polyfunctional (meth)acrylate having a urethane bond (hereinafter, this may be simply referred to as component (B32b)), and a polyfunctional (meth) acrylate (hereinafter, this may be simply referred to as component (B32c)) corresponding neither to the component (B32a) nor the component (B32b)).

<Component (B32a) : compound represented by a formula (5) below>

[CF 12]

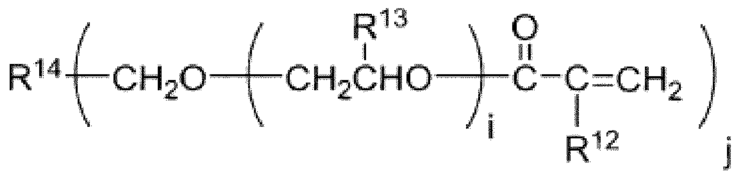

(5)

(In the formula,

$R^{12}$ is a hydrogen atom or a methyl group,
$R^{13}$ is a hydrogen atom or an alkyl group having 1 or 2 carbon atoms,
$R^{14}$ is a tri- to hexavalent organic group having 1 to 10 carbon atoms,
'i' is a number from 0 to 3 on average, and 'j' is a number from 3 to 6.)

For the alkyl group having 1 or 2 carbon atoms represented by the $R^{13}$, a methyl group is preferred. Examples of the organic group represented by $R^{14}$ include a group derived from a polyol, a tri- to hexavalent hydrocarbon group, and an organic group containing a tri- to hexavalent urethane bond.

Specific examples of the compound represented by the formula (5) are as follows.

Trimethylolpropane trimethacrylate, trimethylolpropane triacrylate, tetramethylolmethane trimethacrylate, tetramethylolmethane triacrylate, tetramethylolmethane tetramethacrylate, tetramethylolmethane tetraacrylate, trimethylolpropane triethylene glycol trimethacrylate, trimethylolpropane triethylene glycol triacrylate, ditrimethylolpropane tetramethacrylate, ditrimethylolpropane tetraacrylate, pentaerythritol tetraacrylate, and dipentaerythritol hexaacrylate.

<Component (B32b): polyfunctional (meth)acrylate having urethane bond>

The component (B32b) is obtained by reacting the polyisocyanate compound explained regarding the component (B31d) and a polyol compound. This compound has three or more (meth) acrylate groups in a molecule. Examples of commercially available product thereof include U-4HA (molecular weight: 596, number of functional groups: 4), U-6HA (molecular weight: 1019, number of functional groups: 6), U-6LPA (molecular weight: 818, number of functional groups: 6), and U-15HA (molecular weight: 2300, number of functional groups: 15) manufactured by SHIN-NAKAMURA CHEMICAL Co., Ltd.

<Component (B32c): polyfunctional (meth)acrylate not corresponding to the aforementioned components>

Examples of the component (B32c) include a compound obtained by modifying a terminal of a polyester compound with a (meth)acrylate group. Various commercially available polyester (meth)acrylate compounds can be used in accordance with the molecular weight of the polyester compound serving as a raw material and the amount of modification of the (meth)acrylate group. Specific examples thereof include a tetrafunctional polyester oligomer (EB80 or the like having molecular weight from 2,500 to 3,500, supplied by Daicel UCB), a hexafunctional polyester oligomer (EB450 or the like having molecular weight from 6,000 to 8,000, supplied by Daicel UCB), a hexafunctional polyester oligomer (EB1830 or the like having molecular weight from 45, 000 to 55,000, supplied by Daicel UCB), and a tetrafunctional polyester oligomer (particularly, GX8488B or the like having a molecular weight of 10,000, supplied by DKS Co., Ltd.). Further examples of commercially available product include CN2300, CN2301, CN2302, CN2303, CN2304, SB401, SB402, SB404, SB500E50, SB500K60, SB510E35, SB520E35, SB520M35, CN550 and CN551 manufactured by Arkema S.A.; and A-DPH-6E, A-DPH-12E, A-DPH-6EL, A-DPH-12EL and A-DPH-6P manufactured by SHIN-NAKAMURA CHEMICAL Co., Ltd.

By using the components (B32) (component (B32a), component (B32b) and component (B32c)) exemplified above, the crosslink density is improved by polymerization, and the surface hardness of the obtained cured product can be increased. Therefore, in particular, in a case of using a photochromic cured product (laminate) obtained by a coating method, the component (B32) is preferably contained.

For each of the component (B32a), the component (B32b) and the component (B32c), a single component can be used, or plural kinds of components described above can be used. In a case of using plural kinds of components, the mass to make the standard of the component (B32) is the total amount of the plurality of components. Although not particularly limited, when the total amount of the component (B32) is set to 100 parts by mass, preferably the component (B32a) is 50 to 100 parts by mass, the component (B32b) is 0 to 50 parts by mass, and the component (B32c) is 0 to 50 parts by mass.

Hereinafter, the component (B33) will be described.

<Component (B33): monofunctional (meth)acrylate>

Examples of the component (B33) include a compound represented by a formula (7) below.

[CF 13]

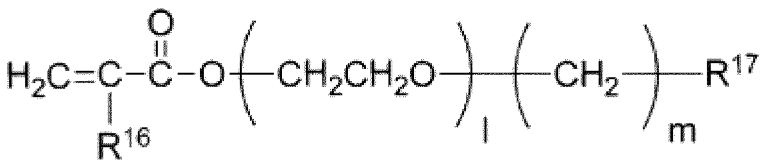

(7)

(In the formula,

$R^{16}$ is a hydrogen atom or a methyl group,
$R^{17}$ is a hydrogen atom, a methyldimethoxysilyl group, a trimethoxysilyl group, or a glycidyl group,
'1' is an integer from 0 to 10, and 'm' is an integer from 0 to 20.)

Specific examples of the compound represented by the above formula (7) are as follows.

Methoxypolyethylene glycol methacrylate (particularly, average molecular weight: 293), methoxypolyethylene glycol methacrylate (particularly, average molecular weight: 468), methoxypolyethylene glycol acrylate (particularly, average molecular weight: 218), methoxypolyethylene glycol acrylate (particularly, average molecular weight: 454),

stearyl methacrylate, lauryl methacrylate, methyl acrylate, ethyl acrylate, butyl acrylate, octyl acrylate, lauryl acrylate, γ-methacryloyloxypropyltrimethoxysilane, γ-methacryloyloxypropylmethyldimethoxysilane, glycidyl methacrylate, tridecyl acrylate, tridecyl methacrylate, isooctyl acrylate, isooctyl methacrylate, isodecyl acrylate, and isodecyl methacrylate.

<Suitable compounding ratio of composition (B') and characteristics thereof>

It is preferable that the component (B) (the composition (B')) comprises component (B1), component (B2), and component (B3). However, since the component (B1) and the component (B2) are not essential components, it may consist of the component (B3) .

In a case where only the component (B3) is contained, the compounding ratios of the respective components fall within the ranges mentioned below in consideration of the hardness, mechanical properties, and photochromic properties such as color optical density and fading rate of the obtained photochromic cured product. In other words, when the total amount of the component (B3) (the total amount of component (B31), component (B32), and component (B33), or the amount of the composition (B')) is set to 100 parts by mass, preferably the component (B31) is 30 to 80 parts by mass, the component (B32) is 10 to 60 parts by mass, and the component (B33) is 0.1 to 20 parts by mass. It is further preferable that the component (B31) is 40 to 75 parts by mass, the component (B32) is 15 to 55 parts by mass, and the component (B33) is 0.5 to 10 parts by mass. Needless to note, the total amount of these components is 100 parts by mass.

Here, it is preferable that at least either the component (B1) or the component (B2) is contained.

When the component (B1) is contained, preferably the compounding ratios fall within the ranges below in order to maintain the hardness and the mechanical properties of the obtained photochromic cured product at high levels and to remarkably improve the photochromic properties like the color optical density and the fading rate. In other words, when the amount of the composition (B') is set to 100 parts by mass, preferably the component (B1) is 0.1 to 20 parts by mass, the component (B31) is 30 to 80 parts by mass, the component (B32) is 10 to 60 parts by mass, and the component (B33) is 0.1 to 10 parts by mass. Further preferably, the component (B1) is 0.5 to 10 parts by mass, the component (B31) is 40 to 75 parts by mass, the component (B32) is 15 to 55 parts by mass, and the component (B33) is 0.5 to 10 parts by mass. Needless to note, the total amount of these components is 100 parts by mass.

When the component (B2) is contained, it is preferable that the compounding ratios fall within the ranges below in order to remarkably improve the hardness and the mechanical properties of the obtained photochromic cured product and to maintain the photochromic properties like the color optical density and the fading rate at higher levels. In other words, when the amount of the composition (B') is set to 100 parts by mass, preferably the component (B2) is 0.1 to 8 parts by mass, the component (B31) is 30 to 80 parts by mass, the component (B32) is 10 to 60 parts by mass, and the component (B33) is 0.1 to 20 parts by mass. Further preferably, the component (B2) is 0.1 to 6 parts by mass, the component (B31) is 40 to 75 parts by mass, the component (B32) is 15 to 55 parts by mass, and the component (B33) is 0.5 to 10 parts by mass. Needless to note, the total amount of these components is 100 parts by mass.

When both the component (B1) and the component (B2) are contained, it is preferable that the compounding ratios fall within the ranges below in order to remarkably improve the hardness and the mechanical properties of the obtained photochromic cured product and to improve also the photochromic properties like the color optical density and the fading rate. In other words, when the amount of the composition (B') is set to 100 parts by mass, preferably, the component (B1) is 0.1 to 20 parts by mass, the component (B2) is 0.1 to 8 parts by mass, the component (B31) is 30 to 80 parts by mass, the component (B32) is 10 to 60 parts by mass, and the component (B33) is 0.1 to 20 parts by mass. Further preferably, the component (B1) is 0.5 to 10 parts by mass, the component (B2) is 0.1 to 6 parts by mass, the component (B31) is 40 to 75 parts by mass, the component (B32) is 15 to 55 parts by mass, and the component (B33) is 0.5 to 10 parts by mass. Needless to note, the total amount of these components is 100 parts by mass. The obtained photochromic laminate exhibits excellent effects particularly in a case where it contains both the component (B1) and the component (B2).

The SP value of the composition (B') is not particularly limited. In view of compatibility with other components, solubility, and further coatability of the photochromic curable composition and applicability to the polyurethane resin layer laminated on the optical substrate, the SP value of the composition (B') is preferably 7.0 to 12.0. The SP value of the component (B') can be determined by titration according to the turbidimetric titration described in detail below. The SP value can be calculated in accordance with the description of the solubility parameter δ in Handbook of Chemistry Applied Edition by the Chemical Society of Japan (published in 1973) and Polymer Handbook (4th edition, edited by Johannnes Brandrup and E.H.Immergut, published in 1998).

It is estimated that the excellent effect is exhibited since the SP value of the component (B') and the SP value of the component (A) are approximate to each other. In order to exhibit a further favorable effect, the SP value of the component (B') is more preferably in a range of 7.5 to 12.0, still more preferably 7.5 to 11.5, and particularly preferably 8.0 to 11.0.

<Component (C): photochromic compound>

As the photochromic compound (C) (component (C)), any known components can be used without any substantial limitations, and the component can be used alone or in combination of two or more of the components.

Representative examples of the photochromic compounds include fulgide compounds, chromene compounds and spirooxazine compounds, which are disclosed in many documents, for instance, JP H02-28154 A, JP S62-288830 A, WO94/22850 pamphlet, WO96/14596 pamphlet, or the like.

Among the known photochromic compounds, a chromene compound having an indeno[2,1-f]naphtho[1,2-b]pyran skeleton may be used more preferably from the viewpoint of photochromic properties such as color optical density, initial colorability, durability, and fading rate. Particularly, a chromene compound having a molecular weight of 540 or more is suitably used because it is particularly excellent in color optical density and fading rate.

Chromene compounds shown below are the examples of chromene compound particularly suitably used, but the present invention is not limited thereto.

[CF 14]

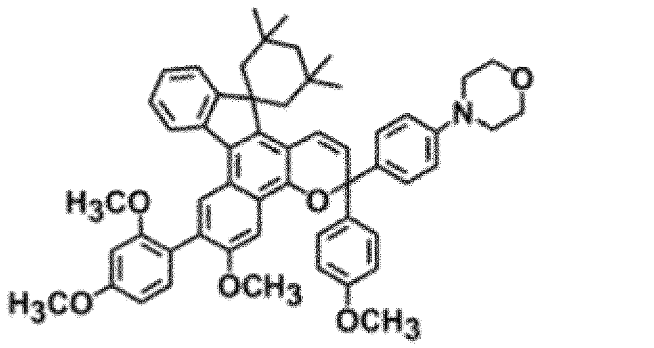
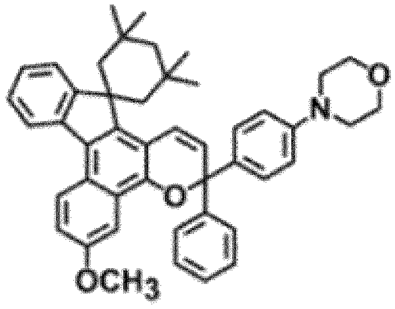
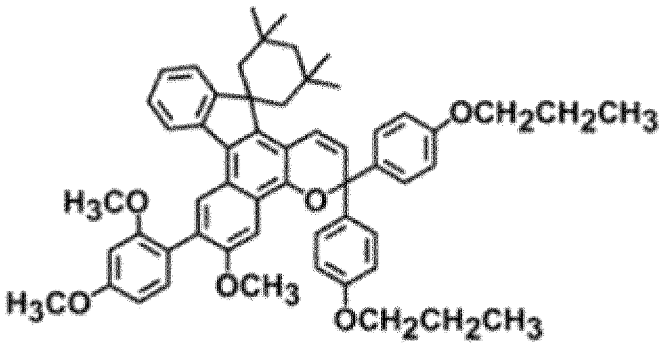
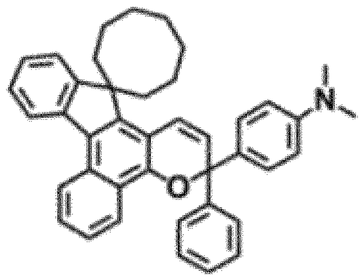

In addition to that, a photochromic compound having an oligomer chain group in a molecule can also be suitably used. Photochromic compounds having such oligomer chain groups are disclosed in many documents such as WO2000/015630 pamphlet, WO2004/041961 pamphlet, WO2009/146509 pamphlet, WO2012/149599 pamphlet, WO2012/162725 pamphlet, WO2013/078086 pamphlet, WO2019/013249 pamphlet, and WO2019/203205 pamphlet. Among the photochromic compounds having an oligomer chain group in the molecule, photochromic compounds having oligomer chain groups as described in WO2019/013249 pamphlet and WO2019/203205 pamphlet are preferably used because both exhibit further favorable photochromic properties and durability. The following photochromic compound having an oligomer chain group is an example of compounds to be used particularly suitably, though the present invention is not limited thereto.

[CF 15]

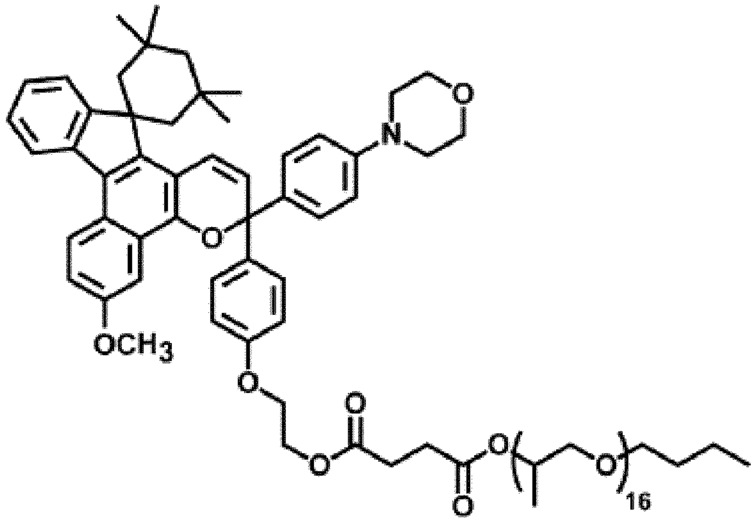

The compounding amount of the component (C) is preferably as follows in consideration of the photochromic properties such as the color optical density and the fading rate of the obtained photochromic cured product. In other words, when the total amount of the component (B) (Composition (B')) is set to 100 parts by mass, the compounding amount of the component (C) is preferably 0.001 parts by mass or more and 20 parts by mass or less, more preferably 0.05 parts by mass or more and 15 parts by mass or less, and still more preferably 0.1 parts by mass or more and 10 parts by mass or less.

The photochromic curable composition contains the component (A), the component (B) (the composition (B')), and the component (C) as essential components. It may further contain other known additives, compounding agents, polymerization initiators and other additive components. The other additive components will be described below.

<Component (D) : organic compound having boiling point of 80°C or higher and 200°C or lower and SP value of 8.0 to 10.0>

An organic compound (component (D)) having a boiling point of 80°C or higher and 200°C or lower and a SP value of 8.0 to 10.0 can be further contained. The SP value may be called also a solubility parameter or a Hildebrand parameter. Since the photochromic curable composition contains the component (D), the appearance defect is prevented or reduced at the time of coating, and the storage stability of the photochromic curable composition becomes favorable.

In a case where the SP value of the component (D) is less than 8.0, compatibility with the component (B) may be lowered and coatability (appliability) on the polyurethane resin layer and ease of coating (workability of coating) may be degraded. In a case where the SP value of the component (D) exceeds 10.0, compatibility with the component (B) may be lowered, and compatibility with the scratch-proof protective film may be favorable, but wrinkle-like defects in the appearance tend to occur. In view of the effect of improving the above points while considering the compatibility with the component (B), the SP value of the component (D) is preferably from 8.0 to 9.5, more preferably from 8.0 to 9.0.

The boiling point of the component (D) is preferably 80°C or higher and 200°C or lower. In a case where the boiling point of the component (D) is lower than 80°C, defects may easily occur at the time of curing the photochromic curable composition, so that an appearance defects of the obtained cured product (photochromic laminate) may be increased. In a case where the boiling point of the component (D) exceeds 200°C, the adhesion and durability of the obtained cured product (photochromic laminate) may be lowered. Here, the term 'adhesion' refers to the adhesion between the photochromic layer formed of the cured product and an optical substrate. In view of the applicability on an optical substrate (or on a polyurethane resin layer), coatability (workability), the appearance of the obtained cured product (photochromic laminate) and the properties, the boiling point of the component (D) is preferably 85°C or higher and 200°C or lower, more preferably 95°C or higher and 200°C or lower, still more preferably 110°C or higher and 170°C or lower.

Since the component (D) is contained, particularly in a case of producing a photochromic cured product, compatibility of the photochromic compound is improved, and the photochromic curable composition itself is uniformly mixed, so that applicability on the polyurethane resin layer and coatability become favorable. Therefore, it is possible to enhance the smoothness of the obtained photochromic layer and to improve the appearance. As a result, it is considered that a photochromic laminate having an excellent appearance can be obtained even in a case where the amount of leveling

agent (surfactant) to be contained in the photochromic curable composition is reduced. Here, the leveling agent may have an adverse effect at the time of protection with a scratch-proof protective film. In other words, even if the content of leveling agent (surfactant) is reduced, the smoothness of the photochromic layer can be increased as described above, so that a photochromic laminate having favorable appearance can be obtained. In this way, in a case where the component (D) is used, a photochromic cured product (photochromic laminate) having excellent properties can be obtained without blending a leveling agent (surfactant).

The component (D) is not particularly limited as long as its SP value and boiling point fall within the ranges. The following organic compounds are preferred in view of compatibility with the suitable component (B) described below. Specific examples of suitable organic compounds are as follows:

aromatic compounds such as toluene (boiling point: 111°C, SP value: 8.8), xylene (boiling point: 138°C, SP value: 8.7), and styrene (boiling point: 145°C, SP value: 8.5);
ketone compounds such as methyl propyl ketone (boiling point: 105°C, SP value: 8.7), methyl isopropyl ketone (boiling point: 95°C, SP value: 8.5), diethyl ketone (boiling point: 101°C, SP value: 8.8), and methyl isobutyl ketone (boiling point: 116°C, SP value: 8.4);
ester compounds such as butyl acetate (boiling point: 124°C, SP value: 8.5), isopropyl acetate (boiling point: 89°C, SP value: 8.4), isobutyl acetate (boiling point: 116°C, SP value: 8.3), and ethyl acetate (boiling point: 80°C, SP value: 9.1);
ether compounds such as diethylene glycol dimethyl ether (boiling point: 162°C, SP value 9.9), and propylene glycol monomethyl ether (boiling point: 120°C, SP value: 9.1); and
cyclic alkyl compounds such as cyclohexane (boiling point: 81°C, SP value: 8.2) . Commercially available products can be used therefor.

From the viewpoint of compatibility with the component (B), the component (D) preferably comprises at least one compound selected from the group consisting of the ether compound, the ester compound, the aromatic compound, the ketone compound, and the cyclic alkyl compound. Further preferably, it comprises at least one compound selected from the group consisting of the ester compound and the aromatic compound. Among them, butyl acetate, toluene, or xylene is preferred. Toluene or xylene is more preferred, and xylene is particularly preferred. The xylene may be a mixture comprising isomers.

These components (D) may be used alone or in combination of at least two of them. The amount to make the standard of the component (D) in a case of using two or more kinds is the total amount of the components (D). The styrene and methyl methacrylate listed here are regarded as the component (D) although both of them have a radically polymerizable group.

The use amount of the component (D) is preferably 0.1 parts by mass or more and 10 parts by mass or less when the total amount of component (B) (amount of composition (B')) is set to 100 parts by mass. When the use amount of the component (D) falls within this range, compatibility with the component (B) can be enhanced, and smoothness of the obtained photochromic layer can be further improved. As a result, appearance defects can be prevented or reduced effectively. Further, adhesion and durability of the photochromic laminate can be improved. Relative to 100 parts by mass of the component (B) (amount of composition (B')), the component (D) is more preferably 0.5 parts by mass or more and 9 parts by mass or less, and particularly preferably 1.0 part by mass or more and 6 parts by mass or less, from the viewpoint of compatibility with the component (B), solubility, and coatability of the photochromic curable composition, applicability to the polyurethane resin layer laminated on the optical substrate, coatability, the influence of the residual organic compound and the like.

<Other additive component>

The photochromic curable composition according to the present Invention may contain various compounding agents known per se within a range not impairing the effect. Examples of the compounding agents include stabilizers such as a polymerization initiator, an ultraviolet absorber, an infrared absorber, an ultraviolet stabilizer, an antioxidant, a coloring inhibitor, an antistatic agent, a fluorescent dye, a dye, a pigment or a perfume, an additive, a solvent, and a leveling agent. These additives can be compounded as required.

The use amount of the other additive component is not limited in particular as long as it does not impair the effects of the present invention. Usually, it is in the range from 0.001 to 10 parts by mass, particularly from 0.01 to 7.5 parts by mass, and further from 0.05 to 6 parts by mass, relative to totally 100 parts by mass of the component (B) (amount of composition (B')). As mentioned above, in a case of compounding the component (D), excellent effects may be exhibited even if the leveling agent (surfactant) is not contained.

(Polymerization initiator)

The polymerization initiator comprises a thermal polymerization initiator and a photopolymerization initiator, and specific examples thereof are as follows.

Examples of the thermal polymerization initiator include:

diacyl peroxides such as benzoyl peroxide, p-chlorobenzoyl peroxide, decanoyl peroxide, lauroyl peroxide, and acetyl peroxide;
peroxy esters such as t-butyl peroxy-2-ethyl hexanate, t-butyl peroxy neodecanate, cumyl peroxy neodecanate, and t-butyl peroxy benzoate;
percarbonates such as diisopropyl peroxy dicarbonate, and di-sec-butyl peroxy dicarbonate; and
azo compounds such as azobisisobutyronitrile.

Examples of the photopolymerization initiator include:

acetophenone-based compounds such as 1-phenyl-2-hydroxy-2-methylpropan-1-one, 1-hydroxycyclohexylphenyl ketone, and 1-(4-isopropylphenyl)-2-hydroxy-2-methylpropan-1-one;
$\alpha$-dicarbonyl-based compounds such as 1,2-diphenylethanedione, and methylphenylglycoxylate; and
acylphosphine oxide-based compounds such as 2,6-dimethylbenzoyl diphenylphosphine oxide, 2,4,6-trimethylbenzoyl diphenylphosphine oxide, 2,4,6-trimethylbenzoyl diphenylphosphinic acid methyl ester, 2,6-dichlorbenzoyl diphenylphosphine oxide, and 2,6-dimethoxybenzoyl diphenylphosphine oxide.

In a case of using the photopolymerization initiator, any known polymerization-curing accelerator like tertiary amine can be used in combination.

(Ultraviolet stabilizer)

The ultraviolet stabilizer is suitably used because it can improve the durability of the photochromic compound. The ultraviolet stabilizer referred to herein does not contain the component (A). As such an ultraviolet stabilizer, a hindered phenol antioxidant, a sulfur-based antioxidant and the like are known. Examples of particularly suitable ultraviolet stabilizer include: 2,6-di-t-butyl-4-methyl-phenol, ethylene bis(oxyethylene) bis[3-(5-t-butyl-4-hydroxy-m-tolyl) propionate], IRGANOX 1010, 1035, 1075, 1098, 1135, 1141, 1222, 1330, 1425, 1520, 259, 3114, 3790, 5057, 565, 254, and 245 manufactured by Ciba Specialty Chemicals.

The use amount of the ultraviolet stabilizer is not particularly limited as long as the effects of the present invention are not impaired, but it is in the range of 0.001 to 10 parts by mass, particularly 0.01 to 3 parts by mass, relative to totally 100 parts by mass of the component (B) (amount of composition (B')).

(Leveling agent)

A leveling agent may be blended in the photochromic curable composition within a range that does not inhibit the effects of the present Invention. Usually, a non-reactive silicone oil is used for the leveling agent. The non-reactive silicone oil is siloxane having a linear polysiloxane skeleton, where the terminal or the side chain of the polysiloxane skeleton is modified with a non-reactive organic functional group. In a case of attaching a scratch-proof protective film to the surface of the photochromic cured product, the non-reactive silicone oil can impart an effect of preventing the pressure-sensitive adhesive of the scratch-proof protective film from sticking to the surface of the photochromic cured product. There is no particular limitation on the non-reactive silicone oil, and examples of commercially available product that can be used therefor include: KF-351A, KF-352A, FL-5, X-22-821, X-22-822, KF-412 and KF-414 manufactured by Shin-Etsu Chemical Co., Ltd.

For the leveling agent, a siloxane having an acyclic polysiloxane bond and a radical reactive group may be used. By using such a leveling agent, a cured product excellent in appearance is obtained. The radical reactive group used here may be similar to a radically polymerizable group in the component (A1) and a group reactive therewith. In addition to the radical reactive group, the leveling agent may contain a functional group that is not reactive. Examples of such non-reactive functional groups include an alkyl group having 1 to 20 carbon atoms, an alkoxy group having 1 to 20 carbon atoms, an aryl group having 4 to 10 carbon atoms, and a polymeric group having 2 to 20 carbon atoms. Specific examples of polymeric group having 2 to 20 carbon atoms include a polypropylene group, a polyether group, a polyethylene group, and a polyolefin group. The leveling agent may contain plural kinds of these non-reactive functional groups, and preferably, it contains at least one functional group selected from the group consisting of an alkyl group having 1 to 20 carbon atoms, an alkoxy group having 1 to 20 carbon atoms, and a polymeric group having 2 to 20 carbon

atoms. More preferably, the non-reactive functional group is at least one selected from the group consisting of a methyl group, a methoxy group, an ethoxy group, a phenyl group, a polypropylene group, and a polyether group.

A compound represented by a formula (8) below is particularly preferred.

[CF 16]

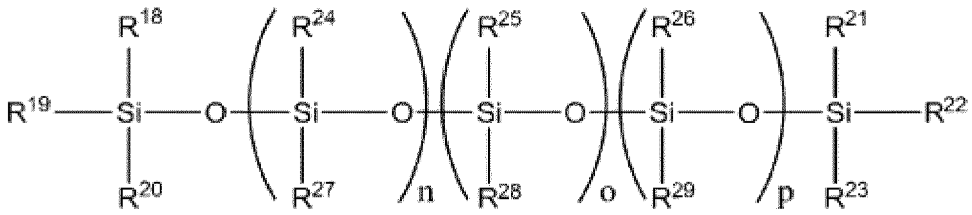

(8)

In the formula (8), n is a number from 0 to 20, preferably a number from 1 to 15; o is a number from 0 to 20, preferably a number from 1 to 15; and p is a number from 0 to 20, preferably a number from 1 to 15.

$R^{18}$, $R^{19}$, $R^{20}$, $R^{21}$, $R^{22}$, $R^{23}$, $R^{24}$, $R^{25}$, $R^{26}$, $R^{27}$, $R^{28}$ and $R^{29}$ are each a hydrogen atom, an alkyl group having 1 to 20 carbon atoms, an alkoxy group having 1 to 20 carbon atoms, a phenyl group, $-(CH_2)_\alpha OR^{30}$, $-(CH_2CH_2O)_\alpha R^{30}$, $-(CH(CH_3)CH_2O)_\alpha R^{30}$, $-(CH_2CH(CH_3)O)_\alpha R^{30}$, $-(CH_2)_qO-(CH_2CH_2O)_rR^{30}-$, $-(CH_2)_qO-(CH(CH_3)CH_2O)_rR^{30}$, $-(CH_2)_qO-(CH_2CH(CH_3)O)_rR^{30}$, $-(CH_2CH_2O)_q-(CH_2CH(CH_3)O)_rR^{30}$, $-(CH_2CH(CH_3)O)_q-(CH_2CH_2O)_rR^{30}$, $-(CH_2CH_2O)_q-(CH_2CH(CH_3)O)_r-(CH_2CH_2O)_sR^{30}$, $-(CH_2)_qO-(CH_2CH_2O)_r-(CH_2CH(CH_3)O)_sR^{30}$, $-(CH_2)_qO-(CH_2CH(CH_3)O)_r-(CH_2CH_2O)_sR^{30}$, $-(CH_2)_qO-(CH_2CH_2O)_r-(CH_2CH(CH_3)O)_s-(CH_2CH_2O)_zR^{30}$, an acryloyl group, a methacryloyl group, a vinyl group, a thiol group, an amino group, $-R^{31}NH_2$, an epoxy group, a group represented by a formula (9) below, or a group represented by a formula (10) below.

As the alkyl group having 1 to 20 carbon atoms, a methyl group or an ethyl group is preferred. As the alkoxy group having 1 to 20 carbon atoms, a methoxy group or an ethoxy group is preferred.

$R^{30}$ is a hydrogen atom, a methyl group, an ethyl group, an n-propyl group, or an isopropyl group.

$R^{31}$ is an alkylene group having 1 to 20 carbon atoms, or $-(CH_2)_\alpha O-$.

At least one of $R^{18}$ to $R^{29}$ is an acryloyl group, a methacryloyl group, a vinyl group, a thiol group, an amino group, $-R^{31}NH_2$, an epoxy group, a group represented by a formula (9) below, or a group represented by a formula (10) below.

[CF 17]

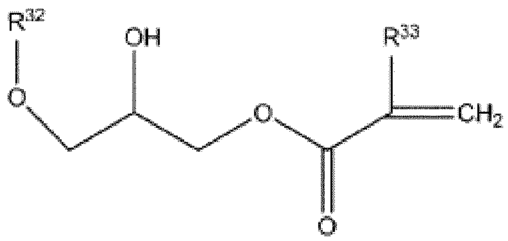

(9)

In the formula (9), $R^{32}$ is an alkylene group having 1 to 20 carbon atoms, $-(CH_2)_\alpha O-$, $-(CH_2CH_2O)_\alpha-$, or $-(CH_2CH(CH_3)O)_\alpha-$; $R^{32}$ is to be bonded to any Si of the formula (8).

$R^{33}$ is a hydrogen atom or a methyl group.

[CF 18]

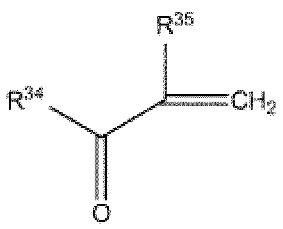

(10)

In the formula (10), $R^{34}$ is an oxygen atom, $-(CH_2)_\alpha O-$, $-(CH_2CH_2O)_\alpha-$, $-(CH(CH_3)CH_2O)_\alpha-$, $-(CH_2CH(CH_3)O)_\alpha-$, $-(CH_2)_qO-(CH_2CH_2O)_r-$, $-(CH_2)_qO-(CH(CH_3)CH_2O)_r-$, $-(CH_2)_qO-(CH_2CH(CH_3)O)_r-$, $-(CH_2CH_2O)_q-(CH_2CH(CH_3)O)_r-$, $-(CH_2CH(CH_3)O)_q-(CH_2CH_2O)_r-$, $-(CH_2CH_2O)_q-(CH_2CH(CH_3)O)_r-(CH_2CH_2O)_s-$, $-(CH_2)_qO-(CH_2CH_2O)_r-(CH_2CH(CH_3)O)_s-$, $-(CH_2)_qO-(CH_2CH(CH_3)O)_r-(CH_2CH_2O)_s-$, or $-(CH_2)_qO-(CH_2CH_2O)_r-(CH_2CH(CH_3)O)_s-(CH_2CH_2O)_z-$). $R^{34}$ is to be bonded to any of Si of the formula (8).

$R^{35}$ is a hydrogen atom or a methyl group.

In the formula (8), the formula (9) and the formula (10), $\alpha$ is a number from 1 to 20, preferably a number from 1 to 15; q, r, s, and z are each a number from 0 to 20; q+r is a number from 1 to 40; q+r+s is a number from 1 to 60; and q+r+s+z is a number from 1 to 80.

The radically polymerizable group and the group that is reactive with a radically polymerizable group in the siloxane preferably contain a (meth)acryloyl group.

As the leveling agent represented by the formula (8), any commercially available product can be used.

Examples of the leveling agent represented by the formula (8) having at least one functional group selected from the group consisting of a group represented by the formula (9), a group represented by the formula (10) and an acryloyl group include: TEGO (registered trademark: hereinafter shown as "TMR"), RAD2100, and TEGO[TMR] RAD2300 manufactured by Evonik Japan Co., Ltd.; BYK[TMR]-UV3505, BYK[TMR]-UV3505, BYK[TMR]-UV3510, BYK[TMR]-UV3530, BYK[TMR]-3550, BYK[TMR]-3560, BYK[TMR]-UV3565, BYK[TMR]-3566, BYK[TMR]-UV3500, BYK[TMR]-UV3535, BYK[TMR]-UV3570, BYK[TMR]-UV3575, and BYK[TMR]-UV3576 manufactured by BYK Japan KK; and KR-513, and X-22-2445 manufactured by Shin-Etsu Chemical Co., Ltd.

Examples of leveling agent having a methacryloyl group and represented by the formula (8) include X-40-9296, X-22-164, X-22-164A, X-22-164B, X-22-164C, and X-22-164E manufactured by Shin-Etsu Chemical Co., Ltd.

Examples of leveling agent having a vinyl group and represented by the formula (8) include KR-511 manufactured by Shin-Etsu Chemical Co., Ltd.

Examples of leveling agent having an amino group and represented by the formula (8) include KF-8010, KF-8012, X-22-161A, X-22-161B, and KF-8008 manufactured by Shin-etsu Chemical Co., Ltd.; and DOWSIL[TMR] BY16-205, DOWSIL[TMR] BY16-213, DOWSIL[TMR] 16-849 Fluid, DOWSIL[TMR] 16-853U, DOWSIL[TMR] 16-871, DOWSIL[TMR] 16-879B, DOWSIL[TMR] 16-892, DOWSIL[TMR] FZ-3705, DOWSIL[TMR] FZ-3710 Fluid, DOWSIL[TMR] FZ-3785, and DOWSIL[TMR] SF-8417 Fluid manufactured by Dow Toray Co., Ltd.

Examples of leveling agent having a thiol (mercapto) group and represented by the formula (8) include KR-518, X-22-167B, X-22-167C, X-22-173BX and X-22-173DX manufactured by Shin-Etsu Chemical Co., Ltd.

Examples of leveling agent having an epoxy group and represented by the formula (8) include: KR-516, KR-517, X-24-9590, and X-41-1590A manufactured by Shin-Etsu Chemical Co., Ltd.; DOWSIL[TMR] BY16-839, DOWSIL[TMR] BY16-876, DOWSIL[TMR] FZ-3736 Fluid, DOWSIL[TMR] SF8411 Fluid, DOWSIL[TMR] SF8413 Fluid, DOWSIL[TMR] SF8421 Fluid, and DOWSIL[TMR] L-9300 manufactured by Dow Toray Co., Ltd.

Suitable compounding ratio of leveling agent

The compounding amount of the leveling agent is not particularly limited, but preferably, 0.01 parts by mass or more and 10.0 parts by mass or less relative to 100 parts by mass of the component (B). When the amount of the leveling agent is excessively large or excessively small, smoothness of the coating film of the curable composition may deteriorate, and a plurality of irregularities or the like may appear on the cured product, resulting in deterioration in appearance. In order to enhance the smoothness of the curable composition and to improve the appearance of the cured product, the amount of the leveling agent is more preferably 0.05 parts by mass or more and 5.0 parts by mass or less, and still more preferably 0.10 parts by mass or more and 2.0 parts by mass or less.

<Method for producing photochromic curable composition / properties>

The photochromic curable composition according to the embodiment can be produced by mixing components (A), (B), (C), and, if necessary, other additive components (including component (D)). Though the procedure of mixing the respective components is not particularly limited, the component (B) and the component (C) are mixed in advance, and further the component (A) and if necessary, the component (D) can be mixed in a state where the component (C) is sufficiently dispersed in the component (B). In this case, the additive components may be compounded at any stage.

The SP value of the photochromic curable composition is not particularly limited. In consideration of the uniform dispersability of the respective components, the coatability of the photochromic curable composition and the applicability to the polyurethane resin layer laminated on the optical substrate, the SP value is preferably from 7.0 to 12.0, more preferably from 7.5 to 12.0, still more preferably from 7.5 to 11.5, and particularly preferably from 8.0 to 11.0. This SP value is calculated by titration in accordance with the turbidimetric titration described in detail below.

<Photochromic cured product and laminate>

A photochromic cured product is obtained by curing the photochromic curable composition produced by the aforementioned method. By producing this cured product on an optical substrate, a laminate having a photochromic layer comprising a cured product of the photochromic curable composition can be produced.

Curing for forming the photochromic laminate is carried out by a radical polymerization reaction according to irradiation with activation energy rays such as UV rays, $\alpha$ rays, $\beta$ rays, $\gamma$ rays, and LED rays, heat, or a combination of both. In other words, an appropriate curing technique may be employed depending on the type of the polymerizable monomer or the polymerization curing accelerator in use and the type of the photochromic laminate to be formed. In a case of forming the photochromic laminate by a coating method described later, photopolymerization will be employed preferably because a uniform film thickness can be obtained.

In photopolymerization of the photochromic curable composition, the curing conditions, particularly, UV intensity affects the properties and shapes of the obtained photochromic laminate. Although this illuminance condition cannot be limited generally since it is under influences of the type and amount of the photopolymerization initiator and the type of the polymerizable monomer, it is preferable to select a condition such that UV rays of 10 to 500 $mW/cm^2$ at a wavelength of 365 nm is irradiated for 0.1 to 5 minutes. According to the present invention, it is possible to prevent or reduce the bleed-out of the component (A) while maintaining the effect of the component (A), and thus, the intensity range of the UV light at production can be set wide. In other words, sufficient curing can be achieved without increasing excessively the UV light intensity, and thus, the bleed-out can be prevented or reduced and the conditions for production can be expanded.

In a case of obtaining the photochromic laminate by a lamination method (coating method), a photochromic curable composition is used as a coating solution. The coating solution is applied to the surface of an optical substrate such as a lens substrate by spin coating, dipping or the like. Subsequently, polymerization curing is performed by UV radiation or heating in an inert gas such as nitrogen. In this manner, a laminate having a photochromic layer of a photochromic cured product laminated on the surface of an optical substrate is obtained.

Examples of the optical substrate include those of known materials, which are used for lenses for eyeglasses, windows in houses and automobiles, and the like. Specific examples of materials of the optical substrate include plastic materials such as (meth)acrylic resins, polycarbonate-based resins, allyl-based resins, thiourethane-based resins, urethane-based resins and thioepoxy-based resins, and glass.

In a case of forming a photochromic laminate on a surface of an optical substrate by a lamination method (coating method) as described above, it is possible to enhance adhesion between the photochromic laminate and the optical substrate by treating the surface of the optical substrate chemically with an alkali solution, an acid solution or the like, or physically with a corona discharge, a plasma discharge, polishing or the like. It is also possible to provide a transparent adhesive resin layer on the surface of the optical substrate. This transparent adhesive resin layer is preferably a polyurethane resin layer. In other words, it is preferable to form a photochromic laminate comprising a laminated structure in which a polyurethane resin layer and a resin layer containing a photochromic compound are laminated in this order on the surface of the optical substrate. In production of the laminate, a photochromic curable composition of the present invention is suitably used, as described in detail below.

<Method of forming photochromic layer on polyurethane resin layer>

It is preferable that the polyurethane resin layer is formed by applying a coating solution on the surface of the optical substrate and then removing a solvent of the coating solution. The coating solution contains a polyurethane resin and at least one component selected from the group consisting of precursors of moisture-curable urethane resins that can be cured by moisture in the air, and the solvent having a boiling point of 70°C or higher and a SP value of 8.0 or more.

Specifically, it is preferable to produce a photochromic laminate through the following steps. First, a step of forming a polyurethane resin layer is performed by applying on the surface of the optical substrate a coating solution containing a polyurethane resin and at least one component selected from the group consisting of precursors of moisture-curable urethane resins that can be cured by moisture in the air, and a solvent having a boiling point of 70°C or higher and a SP value of 8.0 or more, and then removing the solvent.

For the coating solution, a commercially available product can be used. It is particularly preferable to use a coating solution containing solid ingredients containing a polyurethane resin and at least one component selected from the group consisting of precursors of moisture-curable urethane resins that can be cured by moisture in the air, and also a solvent, where the content of the solid ingredients is 15 to 40% by mass and the solvent having a SP value of 8.0 or more is 60 to 85% by mass (this range is referred to a case where the total amount of the solid ingredients and the solvent is set to 100% by mass, and any other known component may be compounded in the coating solution).

For the solvent having SP value of 8.0 or more, solvents same as those exemplified as organic compounds having SP value of 8.0 or more in the component (D) can be used. Solvents described below are preferred particularly

since a urethane resin, moisture-curable urethane, and/or a precursor of moisture-curable urethane are included. Specific examples of solvent having a boiling point of 70°C or higher and SP value of 8.0 or more include: toluene (boiling point: 111°C, SP value: 8.8), xylene (boiling point: 138°C, SP value: 8.7), ethyl acetate (boiling point: 77°C, SP value: 9.0), methyl propyl ketone (boiling point: 105°C, SP value: 8.7), butyl acetate (boiling point: 124°C, SP value: 8.5), methyl isopropyl ketone (boiling point: 95°C, SP value: 8.5), isopropyl acetate (boiling point: 89°C, SP value: 8.4), isobutyl acetate (boiling point: 116°C, SP value: 8.3), methyl isobutyl ketone (boiling point: 116°C, SP value: 8.5), ethylene glycol dimethyl ether (boiling point: 85°C, SP value: 8.6), propylene glycol monoethyl ether acetate (boiling point: 146°C, SP value: 8.6), methyl acetoacetate (boiling point: 170°C, SP value: 8.4), and diethyl ketone (boiling point: 101°C, SP value: 8.8). These solvents can be used alone, or a mixed solvent of two or more thereof can be used. In a case of using a mixture, the total amount of the mixed solvents is regarded as the standard. As for the SP value, a value of the mixed solvents is employed.

The coating solution is applied on an optical substrate. Then, the solvent having a SP value of 8.0 or more is removed so that a polyurethane resin layer can be formed. In a case where a precursor of the moisture-curable urethane resin is included, the polyurethane resin layer can be formed by curing with the moisture in air.

Though the thickness of the polyurethane resin layer on the optical substrate is not particularly limited, it is preferably 3.5 to 10.0 μm.

Subsequently, the photochromic curable composition is applied on the polyurethane resin layer, and then, the photochromic curable composition is cured, thereby forming a cured product. By carrying out this step, a photochromic laminate can be produced. In other words, a photochromic layer comprising a cured product of a photochromic curable composition can be formed on the polyurethane resin layer. The applied photochromic curable composition can be cured in the manner described above. Though there is no particular limitation on the thickness of the photochromic layer, it is 30 to 50 μm.

An excellent effect is exhibited in a case of forming a photochromic layer on the polyurethane resin layer. Although the reason has not been clarified, it is considered that this may be caused by the smaller amount of bleed-out of the component (A). In addition to that, in a case where the component (D) is compounded, it is estimated that the component (D) has a SP value close to that of the solvent used for the coating solution and that of the polyurethane resin layer to be formed. In other words, it is considered that the photochromic curable composition has a remarkably favorable applicability with the urethane resin layer formed from the coating solution. As a result, it is considered that an excellent effect is exhibited even if the photochromic curable composition contains a smaller amount of leveling agent (surfactant).

Further in some cases, a certain amount of the solvent (solvent having a boiling point of 70°C or higher and a SP value of 8.0 or more) may remain in the polyurethane resin layer at the time of applying the photochromic curable composition. It is considered that, when a small amount of the solvent remains, a photochromic laminate having excellent properties can be produced in a case of compounding the component (D) and the productivity can be improved.

The photochromic curable composition can exhibit excellent photochromic properties such as color optical density and fading rate. Furthermore, this can make a cured product imparted with favorable photochromic properties without degrading its properties like mechanical strength. The explanation above relates to a method of coating the photochromic curable composition. The photochromic cured product can be produced also from the photochromic curable composition by methods such as casting polymerization, a dip-coating method, a flow-coating method, a spraying method, or a binder method.

The photochromic cured product and the laminate formed from the photochromic curable composition may be dyed with a dyestuff such as a dispersing dye depending on the use. Further, a hard coat layer may be further laminated thereon. The hard coat layer is formed by using a silane coupling agent and a hard coat agent based on a sol of oxide of silicon, zirconium, antimony, aluminum, tin, tungsten or the like. It is also possible to form a thin film directly or on the hard coat layer by vapor-deposition of a metal oxide such as a $SiO_2$, $TiO_2$, or $ZrO_2$. Post-treatments such as an antireflection treatment and an antistatic treatment may be performed further, for instance, by a thin film having an organic polymer applied thereon.

From the viewpoint of improving the appearance of the photochromic laminate described above, the Vickers hardness of the photochromic cured product (a state in which a hard coat film or the like is not formed) is preferably 3.0 or more and 8.0 or less, more preferably 3.5 or more and 7.5 or less, and particularly preferably 4.0 or more and 7.5 or less.

A scratch-proof protective film may be attached to the surface of the photochromic resin layer of the photochromic laminate for the purpose of protecting the surface.

As mentioned above, in a case of attaching the scratch-proof protective film on the surface of the photochromic cured product (at least on the photochromic layer), the pressure-sensitive adhesive in the scratch-proof protective film may be stuck to the surface of the cured product, thereby causing appearance defects on the cured product such as wrinkles by the adhesive. In order to reduce the problem, it is preferable that there is a certain difference between the SP value of the photochromic curable composition and the SP value of the pressure-sensitive adhesive.

The upper limit of this difference in the SP values is not particularly limited, but it is preferably 5 or less from

the viewpoint of adhesiveness. The difference in the SP values is preferably from 0.05 to 5.0, more preferably from 0.075 to 4.0, and particularly preferably from 0.1 to 3.0. The SP value of the photochromic curable composition and the SP value of the pressure-sensitive adhesive can be determined by titration by the turbidimetric titration as described in detail in Examples below.

In a case of attaching the scratch-proof protective film on the photochromic laminate, the photochromic cured product preferably has a higher contact angle with respect to ethylene glycol from the viewpoint of reducing the appearance defects caused by the pressure-sensitive adhesive in the scratch-proof protective film sticking to the surface of the cured product. Specifically, it is preferable that the contact angle is 50° or more. By making the angle to 50° or more, the appearance defects can be reduced. Though the upper limit of the contact angle of the photochromic cured product with respect to the ethylene glycol is not particularly limited, it is preferably less than 90° . The contact angle is more preferably 50° or more and less than 90°, and even more preferably 50° or more and 85° or less.

Examples:

Hereinafter, the present invention will be described in detail by referring to Examples and Comparative Examples, but the present invention is not limited to these Examples. The notation, evaluation method and the like of each component are as follows.

Component (A)

<Components (A1) (Component (A1X))>

HALS-2: 1,2,2,6,6,-pentamethyl-4-piperidyl methacrylate (molecular weight: 239), which is a compound having $R^{100}$ and $R^{300}$ as methyl groups and t, u, and v as zero in formula (X)

HALS-3: a hindered amine (molecular weight: 370) having the methacrylate group represented by a formula (HALS-3) below and a piperidyl group

[CF 19]

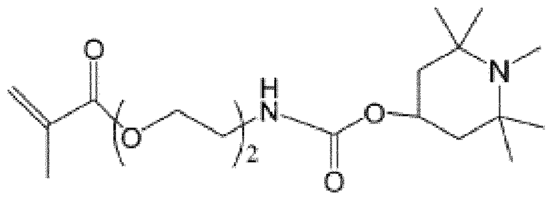

(HALS-3)

The HALS-3 was prepared in the following manner.

Synthesis of "HALS-3"

A stir blade, a thermometer and a dropping funnel were installed in a 200mL four-neck flask. This flask was charged with 17.0 g (0.1 mol) of 1,2,2,6,6-pentamethyl-4-hydroxypiperidine, 7.4 mg of dibutyltin dilaurate, 6.1 g (0.05 mol) of dibutylhydroxy toluene, and 60 mL of dehydrated toluene. The mixture was heated to 60°C, and 19.9 g (0.1 mol) of 2-(2-methacryloyloxyethyloxy)ethyl isocyanate was added thereto portionwise, and stirred at temperature in a range of 60 to 65°C for one hour. Thereafter, it was washed three times with 50 mL of water and extracted with toluene. After drying with magnesium sulfate, the solvent was distilled off. The resulting white solid was purified on a neutral alumina column {developing solvent: chloroform / ethyl acetate = 3/1(v/v) } to obtain 36.3 g of white solid.

The elemental analysis values of this product were as follows. C: 65.09%, H: 9.75%, N: 7.70%, and O: 17.47%. These values agree quite well with the calculated value for $C_{20}H_{35}N_2O_4$, namely, C: 65.19%, H: 9.85%, N: 7.60%, and O: 17.37%.

In a measurement of the nuclear magnetic resonance spectrum of protons, a peak for 32 protons was observed at 1 to 5 ppm, and a peak of 2 protons based on a methacryloyl group and a peak of 1 proton based on a hydrogen atom at 4-position of a piperidyl group were observed at 5 to 7 ppm.

Therefore, it was confirmed that this was a compound represented by the formula (HALS-3). The yield was 92%.

<Component (A2) (Component (A2Y)>

HALS-1: bis(1,2,2,6,6-pentamethyl-4-piperidyl) sebacate (molecular weight: 508), a compound having $R^{500}$ and $R^{600}$ as methyl groups and W as 8 in the formula (Y)

Component (B)

Component (B1)

RX-1: polyrotaxane having acrylate group

A polyrotaxane having an acrylate group imparted with the following properties was synthesized in accordance with the method described in WO2018/030257.

Weight average molecular weight Mw (GPC) of polyrotaxane having acrylate group (RX-1): 180,000
Acrylate group denaturation rate in side chain: 80 mol%
Percentage of OH groups remaining in side chain: 20 mol%
Axial molecule: linear polyethylene glycol (PEG) having molecular weight of 11,000
Clathrate ring: $\alpha$-cyclodextrin ($\alpha$-CD), introduction rate of 0.25
Terminal of axial molecule: sealed with adamantane
Side chain introduced into clathrate ring: molecular weight of side chain (on average) of approximately 500
Number of acrylate groups per molecule: approximately 90

As for the RX-1, the weight average molecular weight Mw was determined by GPC under the conditions below.

<Measurement of weight average molecular weight Mw of component (B1): RX-1>

The weight average molecular weight Mw of the component (B1): polyrotaxane (RX-1) was determined by gel permeation chromatography (GPC). As for the instrument, a liquid chromatographic apparatus (manufactured by Nihon Waters KK) was used. For the columns, two TSKgel SuperHM-M (exclusion limit molecular weight: 4,000,000, manufactured by TOSOH CORPORATION) were used in series.

Tetrahydrofuran was used for the developing solvent, and measurement was carried out under conditions with the flow rate of 0.6 ml/min at a temperature of 40°C. Polystyrene was used as a standard sample, and the weight average molecular weight was determined by a comparative conversion. The weight average molecular weight of RX-1 was 180,000.

Component (B2)

SO-1: silsesquioxanes having methacrylate group synthesized by the process described below

Number of methacrylate groups per molecule: 20
Weight average molecular weight of silsesquioxane having methacrylate group: 4,800

<Method for producing component (B2): SO-1>

Ethanol (248 ml) and 54 g (3.0 mol) of water were added to 248 g (1.0 mol) of 3-trimethoxy silylpropyl methacrylate, to which 0.20 g (0.005 mol) of sodium hydroxide as a catalyst was added, and the raw materials were reacted at 30°C for 3 hours. After confirming dissipation of the raw materials, the reacted materials were neutralized with dilute hydrochloric acid, to which 174 ml of toluene, 174 ml of heptane and 174 g of water were added so as to remove the aqueous layer. Thereafter, the organic layer was washed with water until the aqueous layer was neutralized, and the solvent was concentrated to obtain the silsesquioxane (PMS-1) used in the present Invention. Further, it was confirmed by $^{1}$H-NMR that the raw materials were completely consumed. It was confirmed by $^{29}$Si-NMR that SO-1 is a mixture of a cage-like structure, a ladder-like structure and a random structure.

<Confirmation of acid value of component (B2): SO-1>

The acidic component contained in the SO-1 was evaluated by conducting titration as described below, whereby quantity of the acid value was determined. In a 2ml microburette, 0.1 mol/L of potassium hydroxide alcoholic (ethanolic)

solution (hereinafter, a measurement solution) was set to prepare a stirrer. Using a graduated cylinder, ethanol and toluene were precisely weighed by 50 ml each, placed in a 200ml beaker, stirred and mixed with the stirrer. Three drops of phenolphthalein solution were added thereto, and empty titration was performed with the titrant. After the empty titration, 20 g of the sample was placed in the solution, stirred and mixed with a stirrer. Further, three drops of phenolphthalein solution were added, and the sample was titrated with a volumetric solution to obtain a titer. The method for calculating the acid value was based on the following equation.

$$\text{Acid value (mgKOH/g)} = \text{titer (ml)} \times \text{volumetric solution f} \times 5.6 / \text{sample amount (g)}$$

Here, f indicates the factor of the volumetric solution determined by using a standard hydrochloric acid solution. The f of N/10 potassium hydroxide alcoholic solution used in this method was 0.094. The sample amount indicates the weight of silsesquioxane contained in the sample. The acid value of SO-1 measured according to this method was 1.1 mgKOH/g.

<Measurement of weight average molecular weight Mw of component (B2): SO-1>

The weight-average molecular weight Mw of component (B2) : SO-1 was determined by gel permeation chromatography (GPC method). For the instrument, a liquid chromatograph apparatus (manufactured by Nihon Waters KK) was used. Here, three columns of Shodex GPC KF-802 (exclusion limit molecular weight: 5000, manufactured by Showa Denko Co., Ltd.), Shodex GPC GPC KF802.5 (exclusion limit molecular weight: 20,000, manufactured by Showa Denko Co., Ltd.) and Shodex GPC KF-803 (exclusion limit molecular weight: 70,000, manufactured by Showa Denko Co., Ltd.) were used in series.

Tetrahydrofuran was used as the developing solution and measurement was carried under the conditions with the flow rate of 1 ml/min and at a temperature of 40°C. Polystyrene was used as the standard sample, and the weight average molecular weight was determined by comparative conversion. The weight average molecular weight of SO-1 was 4,800.

Component (B2)

SO-2: silsesquioxane (trade name: AC-SQ SI-20, manufactured by TOAGOSEI CO., LTD.)

Number of acrylate groups per molecule: approximately 4
Weight average molecular weight of silsesquioxane having acrylate group: 2,000

Component (B3)

Component (B31): bifunctional (meth)acrylate

Component (B31a)

9G: polyethylene glycol dimethacrylate (average chain length of ethylene glycol chain: 9, average molecular weight: 536)

14G: polyethylene glycol dimethacrylate (average chain length of ethylene glycol chain: 14, average molecular weight: 736)
A-400: polyethylene glycol diacrylate (average chain length of ethylene glycol chain: 9, average molecular weight: 508)

Component (B31b)

BPE800: 2,2-bis[4-(methacryloyloxypolyethoxy) phenyl]propane (c + d = 10, average molecular weight: 804)

Component (B32): polyfunctional (meth)acrylate

Component (B32a)
TMPT: trimethylolpropane trimethacrylate
D-TMP: ditrimethylolpropane tetraacrylate

Component (B31c)

APC56: polycarbonate diol obtained by phosgenation of pentamethylene glycol with hexamethylene glycol (average molecular weight: 1000)

Component (B33)

TSL-1: γ-methacryloyl oxypropyl trimethoxysilane
GMA: glycidyl methacrylate

Component (C)

PC1: compound represented by a formula below

[CF 20]

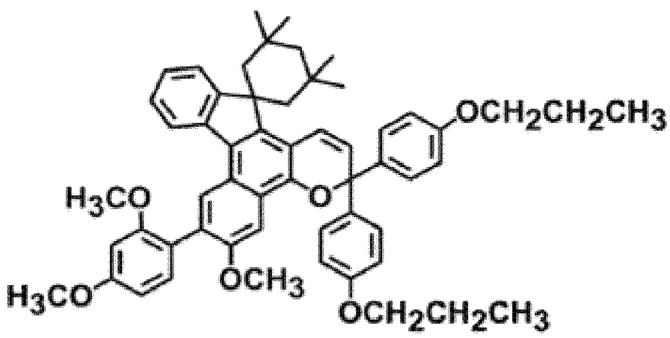

PC2: a compound represented by a formula below, which is synthesized by referring to the process described in WO2019/013249

[CF 21]

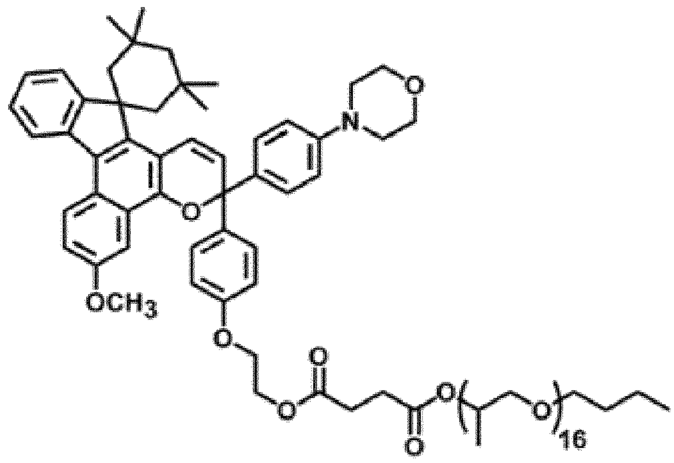

PC3: a compound represented by a formula below, in which photochromic compounds are bonded to the both terminals of a polypropylene glycol chain that is synthesized by the method described in WO2012/149599 and that has a molecular weight of 2000

[CF 22]

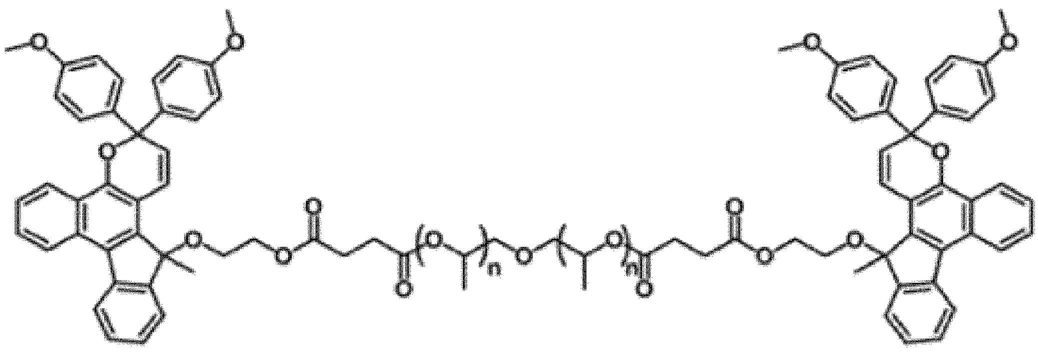

Component (D)

OC-1: xylene (boiling point: 138°C, SP value: 8.7)
OC-2: toluene (boiling point: 111°C, SP value: 8.8)
OC-3: ethyl acetate (boiling point: 80°C, SP value: 9.1)
OC-4: propylene glycol monoethyl ether (boiling point: 120°C, SP value: 9.1)

(Other additive components)

Polymerization initiator

CGI-1: phenylbis(2,4,6-trimethylbenzoyl)-phosphineoxide (trade name: Omnirad819 manufactured by IGM Resins B.V.) (polymerization initiator)
CGI-2: 1-hydroxycyclohexylphenyl ketone (trade name: Omnirad184 manufactured by IGM Resins B.V.) (polymerization initiator)

(Other additive components)

Stabilizer, leveling agent (surfactant)
HP: ethylene bis(oxyethylene)bis
[3-(5-tert-butyl-4-hydroxy-m-tolyl) propionate] (Irganox245 manufactured by Ciba Specialty Chemicals) (stabilizer)
L7001: (trade name: L7001, manufactured by Dow Corning Toray) (leveling agent)

<Example 1>

As for preparation of a photochromic curable composition, and production and evaluation of a photochromic laminate (photochromic cured product), the respective components were thoroughly mixed to prepare the photochromic curable composition according to the following formulation.

Formulation

(Photochromic curable composition)

Components (A)

| | |
|---|---|
| Component (A2): | HALS-1 1 part by mass |
| Component (A1): | HALS-2 1.5 parts by mass |
| Component (B1): | RX-1 3 parts by mass |
| Component (B2): | SO-1 0.1 parts by mass |
| Component (B31a): | 9G 40 parts by mass |
| Component (B31a): | A-400 25 parts by mass |
| Component (B32a): | TMPT 25 parts by mass |
| Component (B33): | TSL-1 5.9 parts by mass |
| GMA | 1 part by mass |
| Component (C): | PC1 2 parts by mass |

Other additive components:

| | |
|---|---|
| (Polymerization Initiator):CGI-1 | 0.3 parts by mass |
| CGI-2 | 0.3 parts by mass |
| (Stabilizer): HP | 1 part by mass |

In the production method, the component (A), the composition (B'), the component (C), and other additive components are first mixed. In Examples and Comparative Examples using the component (D), the obtained mixture was further mixed with the component (D) whereby uniform photochromic curable compositions were obtained.

(Measurement of SP value of photochromic curable composition)

The SP values of the obtained photochromic curable compositions were calculated by turbidimetric titration. That is, 2.0 g of the photochromic curable composition was dissolved in 10 ml of acetone. The thus obtained solution of photochromic curable composition was titrated with deionized water and n-hexane, and a titer at which this solution became turbid was determined. The SP value was calculated from the obtained values, using the following equations.

$$\text{SP value} = ((VH)^{1/2} \times \delta H + (VL)^{1/2} \times \delta L) / ((VH)^{1/2} + (VL)^{1/2})$$

$$VH = H/(S+H)$$

$$VL = L/(S+L)$$

$$\delta H = A \times S/(S+H) + B \times H(S+H)$$

$$\delta L = A \times S/(S+L) + C \times H(S+L)$$

H: n-hexane titer (ml)
L: deionized water titer (ml)
VH: volume fraction of hexane
VL: volume fraction of deionized water
S: acetone use amount (ml)
A: SP value for acetone
B: SP value of n-hexane
C: SP value of deionized water

(Preparation and evaluation of photochromic laminate (photochromic cured product))

Using the photochromic curable composition, a photochromic laminate was obtained by a lamination method. The curing method is shown below.

First, a thiourethane-based plastic lens having a central thickness of 2 mm and a refractive index of 1.60 was prepared as an optical substrate. The thiourethane-based plastic lens used here was in advance subjected to alkali-etching at 50°C for 5 minutes with an aqueous solution of 5% sodium hydroxide and then, washed sufficiently with distilled water.

Using a spin coater (1H-DX2 manufactured by MIKASA CO., LTD.), a moisture-curable primer (coating solution) was coated on the surface of the plastic lens at a rotational speed of 70 rpm for 15 seconds, and further at 1000 rpm for 10 seconds, whereby a polyurethane resin layer of 6 um was obtained. The moisture-curable primer (coating solution) used here contained a precursor of a moisture-curable urethane resin and a solvent. The solvents contained toluene (boiling point: 111°C, SP value: 8.8) and ethyl acetate (boiling point: 77°C, SP value: 9.0), and the amount of ethyl acetate relative to 100 parts by mass of toluene was 185 parts by mass.

Thereafter, about 2 g of the photochromic curable composition obtained in the aforementioned manner was spin-coated on the polyurethane resin layer at a 100 rpm of a rotational speed of 30 seconds followed by a 900 rpm of 5 to 15 seconds so that the film thickness of the photochromic layer was 40 μm.

In this manner, the lens provided with the coating film of the photochromic curable composition was irradiated with light for 90 seconds by using a metal halide lamp at an output of 200 $mW/cm^2$ in a nitrogen gas atmosphere so as to cure the coating film. Thereafter, the lens was further heated at 90°C for 1 hour to produce a photochromic laminate having a photochromic layer (photochromic optical article). The same process was repeated to produce 20 photochromic laminates (photochromic optical articles).

Evaluations were conducted in accordance with the following evaluation processes. The results are described in Table 5.

(Evaluation method)

(Photochromic properties)

The thus obtained photochromic optical articles were used as samples. These samples were irradiated for 300 seconds by use of a xenon lamp L-2480(300W)SHL-100 manufactured by HAMAMATSU PHOTONICS K.K. via an aeromass filter (manufactured by Corning Incorporated) such that the beam intensity on the surface of the photochromic optical article would be 365 nm = 2.4 $mW/cm^2$, 245 nm = 24 $\mu W/cm^2$ at 20±1°C so as to develop color, thereby measuring the photochromic properties.

·Maximal absorption wavelength (λmax)

It is the maximal absorption wavelength after color development determined by a spectrophotometer (instantaneous multichannel photodetector MCPD3000) manufactured by OTSUKA ELECTRONICS CO., LTD. The maximal absorption wavelength relates to the color tone at the time of color development.

$$\cdot\text{Color optical density } \{\varepsilon(300)-\varepsilon(0)\}$$

It is the difference between the absorbance {ε(300) } and the absorbance ε(0) at the maximal absorption wavelength, where {ε(300) } is taken 300 seconds after light irradiation and ε(0) is taken before the light irradiation.
When the value is higher, the photochromic properties are regarded as further favorable.

·Fading rate [t1/2(]ec.)]

It is the time period required for the absorbance at the maximal absorption wavelength of a sample to decrease to 1/2 of {ε(300)-ε(0)} when irradiation with light is stopped after 300 seconds of light irradiation. When the time is shorter, the photochromic properties are regarded as further favorable. In the above evaluations, the thus produced twenty sheets were measured. The average values thereof are shown in the tables.

(2) Repetition durability

The following degradation acceleration test was carried out to evaluate the repetition durability in the color development of photochromic optical articles caused by light irradiation. Degradation of the obtained photochromic laminate (photochromic optical article) was accelerated for 200 hours by a xenon weather meter (X25 manufactured by Suga Test Instruments Co., Ltd.). The color optical density was evaluated before and after the degradation, and the color optical density ($A_0$) before the test and the color optical density ($A_{200}$) after the test were measured.
From this measurement result, a residual rate as an index for the repetition durability was calculated.

$$\text{Residual rate } (\%) = \{(A_{200}/A_0) \times 100\}$$

In the equation, $A_0$ is the color optical density before the test and $A_{200}$ is the color optical density after the test.
Further, a degree of yellowing (ΔYI) was determined by using a colorimeter {SM-4 manufactured by Suga Test Instruments Co., Ltd.}.

$$\Delta YI = YI_{200} - YI_0$$

In the equation, $YI_{200}$ is YI after the accelerated degradation for 200 hours, and $YI_0$ is YI before the accelerated degradation.
The higher the residual rate and the smaller the degree of yellowing, the repetition durability and the photochromic properties are further favorable.

(3) Appearance evaluation (appearance, cracks, white turbidity, wrinkle defect)

All of the obtained photochromic optical articles were subjected to observation and evaluation of the appearance (orange peel-like defects or spiral defects), occurrence of cracks and white turbidity and wrinkle defects (i.e., wrinkle-like appearance defects found on the surface of photochromic optical article), with an optical microscope and an illumination device (QC X75, manufactured by Valvetronics Co., Ltd.). For the evaluation, a scratch-proof protective film (acrylic pressure-sensitive adhesive having a thickness of 0.1 mm) was attached to the photochromic resin layer of the photochromic optical articles. This was heated at a temperature of 70°C for 1 hour, and then, heated further at 70°C for 2 hours before observation. It is possible to obtain an evaluation result of the state of acceleration by heating. If the appearance is favorable after heating for 2 hours, it means that a photochromic optical article (photochromic laminate) having excellent appearance can be obtained even after peeling off the protective film that has been attached for a long period of time.
Evaluations for the appearance, the cracks, the white turbidity and the wrinkle defects were conducted by

observing the photochromic optical article after peeling off the scratch-proof protective film with an optical microscope and an illumination device (QC X75, manufactured by Valvetronics Co., Ltd.). The evaluation criteria are shown below.

<Appearance>

A: All of the photochromic optical articles are uniform and no appearance defects are found.
B: Very slightly minor appearance defects are found (at least one sample).
C: Slight appearance defects are found (at least one sample).
D: Appearance defects are found partly (at least one sample) .
E: Appearance defects are found wholly (at least one sample) .

In a case where there is at least one photochromic optical article with the aforementioned appearance defects among the produced twenty samples, the evaluation results based on the samples with the defects corresponding to the above (low-rated sample) are shown in Tables.

<Cracks>

A: All of the photochromic optical articles are uniform and no cracks are found.
B: Very slightly minor cracks are found (at least one sample) .
C: Slight cracks are found (at least one sample).
D: Cracks are found partly (at least one sample).
E: Cracks are found wholly (at least one sample).

In a case where there is at least one photochromic optical article with the aforementioned cracks among the produced twenty samples, the evaluation results based on the samples with the cracks corresponding to the above (low-rated sample) are shown in Tables.

<White turbidity>

A: All of the photochromic optical articles are uniform and white turbidity is not found at all.
B: Very slightly fine white turbidity is found (at least one sample).
C: Slightly white turbidity is found (at least one sample).
D: White turbidity is found partly (at least one sample).
E: White turbidity is found wholly (at least one sample).

In a case where there is at least one photochromic optical article with the aforementioned white turbidity among the produced twenty samples, the evaluation results based on the samples with the white turbidity corresponding to the above (low-rated sample) are shown in Tables.

<Wrinkle defects>

A: All of the photochromic optical articles are uniform and no wrinkle defects are found.
B: Very slightly fine wrinkle defects are found (at least one sample).
C: Slightly wrinkle defects are found (at least one sample).
D: Wrinkle defects are found partly (at least one sample).
E: Wrinkle defects are found wholly (at least one sample).

In a case where there is at least one photochromic optical article with the aforementioned wrinkle defects among the produced twenty samples, the evaluation results based on the samples with the defects corresponding to the above (low-rated sample) are shown in Tables. This "wrinkle defects" may occur under influences of the pressure-sensitive

adhesive transcribed from the scratch-proof protective film.

As mentioned above, these evaluations refers to the sample in a state heated at 70°C for 1 hour and further heated at 70°C for 2 hours and then peeling the film off. As for the evaluations on the <Appearance>, <Cracks> and <White turbidity>, the results after heating at 70°C for 1 hour were the same as those after heating at 70°C for 2 hours. In some cases, however, regarding the evaluation on <Wrinkle defects>, there was a difference between the result after heating at 70°C for 1 hour and the result after heating at 70°C for 2 hours. Therefore, Table 5 shows both the results.

(4) Yield

As for the twenty photochromic optical articles produced in this manner, observation and evaluation were performed to count the sheets uniform and free from any appearance defects, cracks, white turbidity and/or wrinkle defects, and the number was determined as the yield. For this yield, the results after heating at 70°C for 2 hours are shown in Table 5.

(5) Adhesion

The adhesion was evaluated by a cross-cut tape test according to JISD-0202. Specifically, 100 squares were formed by cutting the surface of the obtained photochromic optical article with a knife at intervals of 1 mm. A cellophane pressure-sensitive adhesive tape (Cellotape (registered trademark) manufactured by NICHIBAN Co., Ltd.) was firmly stuck thereon. After quickly pulling the tape for peeling off at an angle of 90° to the surface, the number of squares with the photochromic optical article remaining was calculated. The averages of twenty samples are shown in the Tables.

(6) Vickers hardness

The Vickers hardness of the photochromic laminate was measured by using a microvickers hardness meter PMT-X7A (manufactured by MATSUZAWA CO., LTD.). The measurement was conducted using a square pyramid type diamond indenter under conditions with 10 gf load and indenter holding time of 30 seconds. The measurement was performed four times in total and the measurement results were indicated as the averages of the second to the fourth measurements, while the values in the first measurement were excluded due to a large measurement error. This test was performed on the twenty photochromic laminates, and the averages were taken as Vickers hardness. The averages of twenty samples are shown in the Tables.

(7) Contact angle to ethylene glycol

Ethylene glycol (2.0 ul) was dropped onto a photochromic laminate. After 5 seconds of the dropping, the contact angle of the thus formed liquid droplet of the ethylene glycol with respect to the photochromic laminate was measured 5 times by using an automatic contact angle meter DM500 (manufactured by Kyowa Interface Science Co., Ltd.) so as to obtain the average. The averages of twenty samples are shown in the Tables.

(8) SP value differences

The difference between SP value of the photochromic curable composition and SP value of the pressure-sensitive adhesive of the scratch-proof protective film was calculated. The averages of twenty samples are shown in the Tables.

(9) Turbidity

In order to evaluate the turbidity of the surface after a long term storage, the following storage acceleration test was performed. That is, the obtained photochromic laminate (photochromic optical article) was placed for 24 hours in a constant temperature and humidity chamber at 60°C and 98%RH. The difference (ΔHAZE) between HAZE before the test and HAZE after the test was determined using a haze meter.

$$\Delta HAZE = HAZE_{24} - HAZE_{0}$$

In the equation, $HAZE_{24}$ represents HAZE after 24 hours, and $HAZE_{0}$ represents HAZE before placement in the constant temperature and humidity chamber.

<Examples 2 to 23, Comparative Examples 1 to 3>

Photochromic curable compositions were prepared in the same manner as in Example 1, except that the respective components described in Tables 1 to 4 were used, and that the output at the curing shown in Tables 1 to 4 were employed. Further, photochromic laminates were produced in the same manner as in Example 1 and evaluated. The evaluation results are shown in Tables 5 and 6.

In any of the Examples and Comparative Examples, as in Example 1, evaluation results for <Appearance>, <Cracks> and <White turbidity> after heating at 70°C for 1 hour were the same as those after heating at 70°C for 2 hours. However, regarding the evaluation on <Wrinkle defects>, there was a difference between the result after heating at 70°C for 1 hour and the result after heating at 70°C for 2 hours in some cases. Therefore, Tables 5 and 6 shows both the results.

[Table 1-1]

| No. | Component (A) (part by mass) | Component (B) | | | Component (C) (part by mass) | Component (D) (part by mass) | Other additive component (part by mass) | Photochromic curable composition SP value | Output at curing (mW) |
|---|---|---|---|---|---|---|---|---|---|
| | | Component (B1) (part by mass) | Component (B2) (part by mass) | Component (B3) (part by mass) | | | | | |
| Example 1 | HALS-1 (1)<br>HALS-2 (1.5) | RX-1 (3) | SO-1 (0.1) | 9G (40)<br>A-400 (25)<br>TMPT (25)<br>TSL-1 (5.9)<br>GMA(1) | PC1 (2) | - | CGI-1 (0.3)<br>CGI-2 (0.3)<br>HP (1) | 9.9 | 200 |
| Example 2 | HALS-1 (1)<br>HALS-3 (1.5) | RX-1 (3) | SO-1 (0.1) | 9G (40)<br>A-400 (25)<br>TMPT (25)<br>TSL-1 (5.9)<br>GMA(1) | PC1 (2) | - | CGI-1 (0.3)<br>CGI-2 (0.3)<br>HP (1) | 9.9 | 200 |
| Example 3 | HALS-1 (1)<br>HALS-3 (1.5) | RX-1 (3) | SO-1 (0.1) | 9G (40)<br>A-400 (25)<br>TMPT (25)<br>TSL-1 (5.9)<br>GMA(1) | PC1 (2) | - | CGI-1 (0.3)<br>HP (1) | 9.9 | 200 |
| Example 4 | HALS-1 (1)<br>HALS-2 (1.5) | RX-1 (3) | SO-1 (0.1) | 9G (40)<br>A-400 (25)<br>TMPT (25)<br>TSL-1 (5.9)<br>GMA(1) | PC2 (2) | - | CGI-1 (0.3)<br>CGI-2 (0.3)<br>HP (1) | 9.9 | 200 |
| Example 5 | HALS-1 (1)<br>HALS-2 (1.5) | RX-1 (3) | SO-1 (0.1) | 9G (40)<br>A-400 (25)<br>TMPT (25)<br>TSL-1 (5.9)<br>GMA(1) | PC3 (2) | - | CGI-1 (0.3)<br>CGI-2 (0.3)<br>HP (1) | 9.9 | 200 |

[Table 1-2]

| No. | Component (A) (part by mass) | Component (B) | | | Component (C) (part by mass) | Component (D) (part by mass) | Other additive component (part by mass) | Photochromic curable composition SP value | Output at curing (mW) |
|---|---|---|---|---|---|---|---|---|---|
| | | Component (B1) (part by mass) | Component (B2) (part by mass) | Component (B3) (part by mass) | | | | | |
| Example 6 | HALS-1 (1)<br>HALS-2 (1.5) | RX-1 (3) | SO-1 (0.1) | 9G (40)<br>A-400 (25)<br>TMPT (25)<br>TSL-1 (5.9)<br>GMA(1) | PC3 (2) | - | CGI-1 (0.3)<br>CGI-2 (0.3)<br>HP (1) | 9.9 | 120 |
| Example 7 | HALS-1 (1)<br>HALS-2 (1.5) | RX-1 (3) | SO-1 (0.1) | 9G (40)<br>A-400 (25)<br>TMPT (25)<br>TSL-1 (5.9)<br>GMA(1) | PC3 (2) | - | CGI-1 (0.3)<br>CGI-2 (0.3)<br>HP (1)<br>L7001 (0.1) | 9.9 | 200 |

[Table 2-1]

| No. | Component (A) (part by mass) | Component (B) | | | Component (C) (part by mass) | Component (D) (part by mass) | Other additive component(part by mass) | Photochromic curable composition SP value | Output atcuring (mW) |
|---|---|---|---|---|---|---|---|---|---|
| | | Component (B1) (part by mass) | Component (B2) (part by mass) | Component (B3) (part by mass) | | | | | |
| Example 8 | HALS-1 (1)<br>HALS-2 (1.5) | RX-1 (3) | SO-1 (0.1) | 9G (40)<br>A-400 (25)<br>TMPT (25)<br>TSL-1 (5.9)<br>GMA(1) | PC1 (2) | OC-1 (3) | CGI-1 (0.3)<br>CGI-2 (0.3)<br>HP (1) | 9.9 | 200 |
| Example 9 | HALS-1 (1)<br>HALS-3 (1.5) | RX-1 (3) | SO-1 (0.1) | 9G (40)<br>A-400 (25)<br>TMPT (25)<br>TSL-1 (5.9)<br>GMA(1) | PC1 (2) | OC-1 (3) | CGI-1 (0.3)<br>CGI-2 (0.3)<br>HP (1) | 9.9 | 200 |
| Example 10 | HALS-1 (1)<br>HALS-2 (1.5) | RX-1 (3) | SO-1 (0.1) | 9G (40)<br>A-400 (25)<br>TMPT (25)<br>TSL-1 (5.9)<br>GMA(1) | PC2 (2) | OC-1 (3) | CGI-1 (0.3)<br>CGI-2 (0.3)<br>HP (1) | 9.9 | 200 |
| Example 11 | HALS-1 (1)<br>HALS-2 (1.5) | RX-1 (3) | SO-1 (0.1) | 9G (40)<br>A-400 (25)<br>TMPT (25)<br>TSL-1 (5.9)<br>GMA(1) | PC3 (2) | OC-1 (3) | CGI-1 (0.3)<br>CGI-2 (0.3)<br>HP (1) | 9.9 | 200 |
| Example 12 | HALS-1 (1)<br>HALS-2 (1.5) | RX-1 (3) | SO-1 (0.1) | 14G (40)<br>BPE800 (15)<br>D-TMP (35)<br>TSL-1 (5.9)<br>GMA(1) | PC1 (2) | OC-1 (3) | CGI-1 (0.3)<br>CGI-2 (0.3)<br>HP (1) | 9.9 | 200 |

[Table 2-2]

| No. | Component (A) (part by mass) | Component (B) | | | Component (C) (part by mass) | Component (D) (part by mass) | Other additive component(part by mass) | Photochromic curable composition SP value | Output atcuring (mW) |
|---|---|---|---|---|---|---|---|---|---|
| | | Component (B1) (part by mass) | Component (B2) (part by mass) | Component (B3) (part by mass) | | | | | |
| Example 13 | HALS-1 (1)<br>HALS-2 (1.5) | RX-1 (3) | SO-1 (0.1) | 14G (40)<br>BPE800 (15)<br>D-TMP (35)<br>TSL-1 (5.9)<br>GMA(1) | PC1 (2) | OC-2 (3) | CGI-1 (0.3)<br>CGI-2 (0.3)<br>HP (1) | 9.8 | 200 |
| Example 14 | HALS-1 (1)<br>HALS-2 (1.5) | RX-1 (3) | SO-1 (0.1) | 14G (40)<br>BPE800 (15)<br>D-TMP (35)<br>TSL-1 (5.9)<br>GMA(1) | PC1 (2) | OC-3 (3) | CGI-1 (0.3)<br>CGI-2 (0.3)<br>HP (1) | 9.8 | 200 |
| Example 15 | HALS-1 (1)<br>HALS-2 (1.5) | RX-1 (3) | SO-1 (0.1) | 14G (40)<br>BPE800 (15)<br>D-TMP (35)<br>TSL-1 (5.9)<br>GMA(1) | PC1 (2) | OC-4 (3) | CGI-1 (0.3)<br>CGI-2 (0.3)<br>HP (1) | 9.8 | 200 |

[Table 3-1]

| No. | Component (A) (part by mass) | Component (B) | | | Component (C) (part by mass) | Component (D) (part by mass) | Other additive component(part by mass) | Photochromic curable composition SP value | Output atcuring (mW) |
|---|---|---|---|---|---|---|---|---|---|
| | | Component (B1) (part by mass) | Component (B2) (part by mass) | Component (B3) (part by mass) | | | | | |
| Example 16 | HALS-1 (0.5)<br>HALS-2 (2.0) | RX-1 (3) | SO-1 (0.1) | 9G (40)<br>A-400 (25)<br>TMPT (25)<br>TSL-1 (5.9)<br>GMA(1) | PC1 (2) | - | CGI-1 (0.3)<br>CGI-2 (0.3)<br>HP (1) | 9.9 | 200 |
| Example 17 | HALS-1 (0.75) HALS-3 (1.25) | RX-1 (3) | SO-1 (0.1) | 9G (40)<br>A-400 (25)<br>TMPT (25)<br>TSL-1 (5.9)<br>GMA(1) | PC1 (2) | - | CGI-1 (0.3)<br>CGI-2 (0.3)<br>HP (1) | 9.9 | 200 |
| Example 18 | HALS-1 (1.5)<br>HALS-2 (1.0) | RX-1 (3) | SO-1 (0.1) | 9G (40)<br>A-400 (25)<br>TMPT (25)<br>TSL-1 (5.9)<br>GMA(1) | PC2 (2) | - | CGI-1 (0.3)<br>CGI-2 (0.3)<br>HP (1) | 9.9 | 200 |
| Example 19 | HALS-1 (2.0)<br>HALS-2 (1.0) | RX-1 (3) | SO-1 (0.1) | 9G (40)<br>A-400 (25)<br>TMPT (25)<br>TSL-1 (5.9)<br>GMA(1) | PC2 (2) | - | CGI-1 (0.3)<br>CGI-2 (0.3)<br>HP (1) | 9.9 | 200 |
| Example 20 | HALS-1 (0.5)<br>HALS-2 (2.0) | RX-1 (3) | SO-1 (0.1) | 9G (40)<br>A-400 (25)<br>TMPT (25)<br>TSL-1 (5.9)<br>GMA(1) | PC1 (2) | OC-1 (3) | CGI-1 (0.3)<br>CGI-2 (0.3)<br>HP (1) | 9.9 | 200 |

[Table 3-2]

| No. | Component (A) (part by mass) | Component (B) | | | Component (C) (part by mass) | Component (D) (part by mass) | Other additive component (part by mass) | Photochromic curable composition SP value | Output at curing (mW) |
|---|---|---|---|---|---|---|---|---|---|
| | | Component (B1) (part by mass) | Component (B2) (part by mass) | Component (B3) (part by mass) | | | | | |
| Example 21 | HALS-1 (0.75)<br>HALS-3 (1.25) | RX-1 (3) | SO-1 (0.1) | 9G (40)<br>A-400 (25)<br>TMPT (25)<br>TSL-1 (5.9)<br>GMA(1) | PC1 (2) | OC-1 (3) | CGI-1 (0.3)<br>CGI-2 (0.3)<br>HP (1) | 9.9 | 200 |
| Example 22 | HALS-1 (1.5)<br>HALS-2 (1.0) | RX-1 (3) | SO-1 (0.1) | 9G (40)<br>A-400 (25)<br>TMPT (25)<br>TSL-1 (5.9)<br>GMA(1) | PC1 (2) | OC-1 (3) | CGI-1 (0.3)<br>CGI-2 (0.3)<br>HP (1) | 9.9 | 200 |
| Example 23 | HALS-1 (1)<br>HALS-2 (1.5) | RX-1 (3) | SO-1 (0.1)<br>SO-2(0.1) | 14G (40)<br>BPE800 (15)<br>D-TMP (35)<br>TSL-1 (5.9)<br>GMA(1) | PC1 (2) | OC-1 (3) | CGI-1 (0.3)<br>CGI-2 (0.3)<br>HP (1) | 9.6 | 200 |

[Table 4]

| No. | Component (A) (part by mass) | Component (B) | | | Component (C) (part by mass) | Component (D) (part by mass) | Other additive component (part by mass) | Photochromic curable composition SP value | Output at curing (mW) |
|---|---|---|---|---|---|---|---|---|---|
| | | Component (B1) (part by mass) | Component (B2) (part by mass) | Component (B3) (part by mass) | | | | | |
| Comparative Example 1 | HALS-1 (2.5) | RX-1 (3) | SO-1 (0.1) | 9G (40)<br>A-400 (25)<br>TMPT (25)<br>TSL-1 (5.9)<br>GMA(1) | PC1 (2) | - | CGI-1 (0.3)<br>CGI-2 (0.3)<br>HP (1) | 9.9 | 200 |
| Comparative Example 2 | HALS-1 (2.5) | RX-1 (3) | SO-1 (0.1) | 9G (40)<br>A-400 (25)<br>TMPT (25)<br>TSL-1 (5.9)<br>GMA(1) | PC1 (2) | - | CGI-1 (0.3)<br>CGI-2 (0.3)<br>HP (1) | 9.9 | 120 |
| Comparative Example 3 | - | RX-1 (3) | SO-1 (0.1) | 9G (40)<br>A-400 (25)<br>TMPT (25)<br>TSL-1 (5.9)<br>GMA(1) | PC1 (2) | - | CGI-1 (0.3)<br>CGI-2 (0.3)<br>HP (1) | 9.9 | 200 |

[Table 5-1]

| No. | Maximal absorption wavelength (λmax) | Color optical density | Fading rate (sec.) | Repetition durability | | Appearance evaluation | | | | |
|---|---|---|---|---|---|---|---|---|---|---|
| | | | | Residual rate (%) | ΔYI | Appearance | Cracks | White turbidity | Wrinkle defects (1 hr) | Wrinkle defects (2 hrs) |
| Example 1 | 576 | 0.88 | 50 | 82 | 7.5 | B | A | A | A | B |
| Example 2 | 576 | 0.88 | 47 | 82 | 7.5 | B | A | A | A | B |
| Example 3 | 576 | 0.88 | 45 | 82 | 7.5 | B | A | A | A | B |
| Example 4 | 570 | 0.88 | 45 | 83 | 7.4 | B | A | A | A | B |
| Example 5 | 570 | 0.88 | 44 | 83 | 7.4 | B | A | A | A | B |
| Example 6 | 577 | 0.89 | 45 | 84 | 7.4 | B | A | A | A | B |
| Example 7 | 576 | 0.88 | 50 | 82 | 7.5 | B | A | A | B | B |
| Example 8 | 577 | 0.89 | 50 | 82 | 7.5 | A | A | A | A | B |
| Example 9 | 577 | 0.89 | 46 | 82 | 7.5 | A | A | A | A | B |
| Example 10 | 570 | 0.88 | 45 | 82 | 7.5 | A | A | A | A | B |
| Example 11 | 570 | 0.88 | 44 | 82 | 7.5 | A | A | A | A | B |
| Example 12 | 576 | 0.86 | 47 | 82 | 7.5 | A | A | A | A | B |
| Example 13 | 576 | 0.86 | 47 | 82 | 7.5 | A | A | A | A | B |

(continued)

| No. | Maximal absorption wavelength (λmax) | Color optical density | Fading rate (sec.) | Repetition durability | | Appearance evaluation | | | | |
|---|---|---|---|---|---|---|---|---|---|---|
| | | | | Residual rate (%) | ΔYI | Appearance | Cracks | White turbidity | Wrinkle defects (1 hr) | Wrinkle defects (2 hrs) |
| Example 14 | 576 | 0.85 | 48 | 82 | 7.5 | B | A | A | A | B |
| Example 15 | 576 | 0.85 | 48 | 82 | 7.5 | B | A | A | A | B |

[Table 5-2]

| No. | Yield (%) | Adhesion | Vickers hardness | Contact angle (°) | SP value difference | ⊿HAZE |
|---|---|---|---|---|---|---|
| Example 1 | 80 | 100 | 4.9 | 52 | 0.3 | 0.2 |
| Example 2 | 80 | 100 | 4.7 | 52 | 0.3 | 0.2 |
| Example 3 | 70 | 100 | 4.4 | 50 | 0.3 | 0.5 |
| Example 4 | 80 | 100 | 4.9 | 52 | 0.3 | 0.2 |
| Example 5 | 80 | 100 | 4.9 | 52 | 0.3 | 0.2 |
| Example 6 | 75 | 100 | 4.5 | 52 | 0.3 | 0.4 |
| Example 7 | 75 | 100 | 4.9 | 52 | 0.3 | 0.4 |
| Example 8 | 95 | 100 | 4.9 | 52 | 0.3 | 0.2 |
| Example 9 | 95 | 100 | 4.8 | 52 | 0.3 | 0.2 |
| Example 10 | 95 | 100 | 4.9 | 52 | 0.3 | 0.2 |
| Example 11 | 95 | 100 | 4.9 | 52 | 0.3 | 0.2 |
| Example 12 | 95 | 100 | 4.9 | 54 | 0.4 | 0.2 |
| Example 13 | 90 | 100 | 4.9 | 54 | 0.4 | 0.2 |
| Example 14 | 85 | 100 | 4.9 | 54 | 0.4 | 0.2 |
| Example 15 | 85 | 100 | 4.9 | 54 | 0.4 | 0.2 |

[Table 6-1]

| No. | Maximal absorption wavelength (λmax) | Color optical density | Fading rate (sec.) | Repetition durability | | Appearance evaluation | | | | |
|---|---|---|---|---|---|---|---|---|---|---|
| | | | | Residual rate (%) | ΔYI | Appearance | Cracks | White turbidity | Wrinkle defects (1 hr) | Wrinkle defects (2 hrs) |
| Example 16 | 576 | 0.87 | 55 | 82 | 7.5 | B | A | A | A | B |
| Example 17 | 576 | 0.87 | 53 | 82 | 7.5 | B | A | A | A | B |
| Example 18 | 576 | 0.88 | 48 | 82 | 7.5 | B | A | A | A | B |
| Example 19 | 576 | 0.88 | 46 | 82 | 7.5 | B | A | A | A | B |
| Example 20 | 577 | 0.88 | 55 | 82 | 7.5 | A | A | A | A | B |
| Example 21 | 577 | 0.88 | 52 | 82 | 7.5 | A | A | A | A | B |
| Example 22 | 577 | 0.89 | 50 | 82 | 7.5 | A | A | A | A | B |
| Example 23 | 577 | 0.89 | 50 | 82 | 7.5 | A | A | A | A | B |
| Comparative Example 1 | 576 | 0.88 | 46 | 82 | 7.4 | B | A | A | B | D |
| Comparative Example 2 | 576 | 0.88 | 46 | 82 | 7.5 | B | A | A | C | D |
| Comparative Example 3 | 576 | 0.85 | 55 | 65 | 11.0 | B | A | A | A | A |

[Table 6-2]

| No. | Yield (%) | Adhesion | Vickers hardness | Contact angle (°) | SP value difference | ⊿ HAZE |
|---|---|---|---|---|---|---|
| Example 16 | 85 | 100 | 5.2 | 52 | 0.3 | 0.1 |
| Example 17 | 85 | 100 | 5.0 | 52 | 0.3 | 0.1 |
| Example 18 | 80 | 100 | 4.9 | 52 | 0.3 | 0.4 |
| Example 19 | 70 | 100 | 4.8 | 52 | 0.3 | 1.0 |
| Example 20 | 95 | 100 | 5.2 | 52 | 0.3 | 0.1 |
| Example 21 | 95 | 100 | 5.0 | 52 | 0.3 | 0.2 |
| Example 22 | 90 | 100 | 4.9 | 52 | 0.3 | 0.4 |
| Example 23 | 90 | 100 | 4.9 | 59 | 0.6 | 0.4 |
| Comparative Example 1 | 55 | 100 | 4.6 | 52 | 0.3 | 3.0 |
| Comparative Example 2 | 50 | 100 | 5.5 | 52 | 0.3 | 3.5 |
| Comparative Example 3 | 80 | 85 | 5.1 | 52 | 0.3 | 0.2 |

<Examples 24 to 34, Comparative Examples 4 and 5>

Photochromic curable compositions and photochromic laminates were prepared in the same manner as in Example 1, except that respective components shown in Table 7 were used, and evaluation tests were carried out. The results are shown in Table 8.

[Table 7-1]

| No. | Component (A) (part by mass) | Component (B) | | | Component (C) (part by mass) | Component (D) (part by mass) | Other additive component(part by mass) | Photochromic curable composition SP value | Output atcuring (mW) |
|---|---|---|---|---|---|---|---|---|---|
| | | Component (B1) (part by mass) | Component (B2) (part by mass) | Component (B3) (part by mass) | | | | | |
| Example 6 | HALS-1 (1)<br>HALS-2 (1.5) | RX-1 (3) | SO-1 (0.1) | 9G (40)<br>A-400 (25)<br>TMPT (25)<br>TSL-1 (5.9)<br>GMA(1) | PC3 (2) | - | CGI-1 (0.3)<br>CGI-2 (0.3)<br>HP (1) | 9.9 | 120 |
| Example 7 | HALS-1 (1)<br>HALS-2 (1.5) | RX-1 (3) | SO-1 (0.1) | 9G (40)<br>A-400 (25)<br>TMPT (25)<br>TSL-1 (5.9)<br>GMA(1) | PC3 (2) | - | CGI-1 (0.3)<br>CGI-2 (0.3)<br>HP (1)<br>L7001 (0.1) | 9.9 | 200 |
| Example 24 | HALS-2 (2.0) | RX-1 (3) | SO-1 (0.1) | 9G (40)<br>A-400 (25)<br>TMPT (25)<br>TSL-1 (5.9)<br>GMA(1) | PC1 (2) | - | CGI-1 (0.3)<br>CGI-2 (0.3) HP (1)<br>L7001 (0.1) | 9.9 | 200 |
| Example 25 | HALS-2 (2.0) | RX-1 (3) | SO-1 (0.1) | 9G (40)<br>A-400 (25)<br>TMPT (25)<br>TSL-1 (5.9)<br>GMA(1) | PC1 (2) | - | CGI-1 (0.3)<br>HP (1)<br>L7001 (0.1) | 9.9 | 200 |
| Example 26 | HALS-2 (2.0) | RX-1 (3) | SO-1 (0.1) | 9G (40)<br>A-400 (25)<br>TMPT (25)<br>TSL-1 (5.9)<br>GMA(1) | PC1 (2) | - | CGI-1 (0.3)<br>HP (1)<br>L7001 (0.1) | 9.9 | 120 |

[Table 7-2]

| No. | Component (A) (part by mass) | Component (B) | | | Component (C) (part by mass) | Component (D) (part by mass) | Other additive component (part by mass) | Photochromic curable composition SP value | Output at curing (mW) |
|---|---|---|---|---|---|---|---|---|---|
| | | Component (B1) (part by mass) | Component (B2) (part by mass) | Component (B3) (part by mass) | | | | | |
| Example 27 | HALS-3 (1.5) | RX-1 (3) | SO-1 (0.1) | 9G (40)<br>A-400 (25)<br>TMPT (25)<br>TSL-1 (5.9)<br>GMA(1) | PC1 (2) | - | CGI-1 (0.3)<br>HP (1)<br>L7001 (0.1) | 9.9 | 200 |
| Example 28 | HALS-1 (1)<br>HALS-2 (1.5) | RX-1 (3) | SO-1 (0.1) | 9G (40)<br>A-400 (25)<br>TMPT (25)<br>TSL-1 (5.9)<br>GMA(1) | PC3 (2) | - | CGI-1 (0.3)<br>CGI-2 (0.3)<br>HP (1)<br>L7001 (0.1) | 9.9 | 120 |
| Comparative Example 4 | HALS-1 (1)<br>HALS-2 (1.5) | - | SO-1 (0.1) | 9G (40)<br>A-400 (25)<br>TMPT (25)<br>TSL-1 (5.9)<br>GMA(1) | PC3 (2) | - | CGI-1 (0.3)<br>CGI-2 (0.3)<br>HP (1)<br>L7001 (0.1) | 9.9 | 200 |
| Comparative Example 5 | HALS-2 (2.0) | - | SO-1 (0.1) | 9G (40)<br>A-400 (25)<br>TMPT (25)<br>TSL-1 (5.9)<br>GMA(1) | PC1 (2) | - | CGI-1 (0.3)<br>CGI-2 (0.3)<br>HP (1)<br>L7001 (0.1) | 9.9 | 200 |
| Example 29 | HALS-2 (2.5) | RX-1 (3) | SO-1 (0.1) | 9G (40)<br>A-400 (25)<br>TMPT (25)<br>TSL-1 (5.9)<br>GMA(1) | PC1 (2) | - | CGI-1 (0.3)<br>CGI-2 (0.3)<br>HP (1) | 9.9 | 200 |

[Table 7-3]

| No. | Component (A) (part by mass) | Component (B) | | | Component (C) (part by mass) | Component (D) (part by mass) | Other additive component(part by mass) | Photochromic curable composition SP value | Output atcuring (mW) |
|---|---|---|---|---|---|---|---|---|---|
| | | Component (B1) (part by mass) | Component (B2) (part by mass) | Component (B3) (part by mass) | | | | | |
| Example 30 | HALS-2 (3.5) | RX-1 (3) | SO-1 (0.1) | 9G (40)<br>A-400 (25)<br>TMPT (25)<br>TSL-1 (5.9)<br>GMA(1) | PC1 (2) | - | CGI-1 (0.3)<br>CGI-2 (0.3)<br>HP (1) | 9.9 | 200 |
| Example 31 | HALS-2 (2.0) | RX-1 (3) | - | 9G (40)<br>A-400 (25)<br>TMPT (25)<br>TSL-1 (5.9)<br>GMA(1) | PC1 (2) | - | CGI-1 (0.3)<br>CGI-2 (0.3)<br>HP (1) L7001 (0.1) | 9.9 | 200 |
| Example 32 | HALS-2 (2.0) | RX-1 (3) | - | 9G (40)<br>A-400 (25)<br>TMPT (25)<br>TSL-1 (5.9)<br>GMA(1) | PC1 (2) | - | CGI-1 (0.3)<br>HP (1)<br>L7001 (0.1) | 9.9 | 200 |
| Example 33 | HALS-2 (2.0) | RX-1 (3) | - | 9G (40)<br>A-400 (25)<br>TMPT (25)<br>TSL-1 (5.9)<br>GMA(1) | PC1 (2) | - | CGI-1 (0.3)<br>HP (1)<br>L7001 (0.1) | 9.9 | 120 |
| Example 34 | HALS-2 (2.0) | RX-1 (3) | - | 9G (40)<br>APC56 (25)<br>TMPT (25)<br>TSL-1 (5.9)<br>GMA(1) | PC1 (2) | - | CGI-1 (0.3)<br>HP (1)<br>L7001 (0.1) | 9.9 | 200 |

[Table 8-1]

| No. | Maximal absorption wavelength (Amax) | Color optical density | Fading rate (sec.) | Repetition durability | | Appearance evaluation | | | | |
|---|---|---|---|---|---|---|---|---|---|---|
| | | | | Residual rate (%) | ΔYI | Appearance | Cracks | White turbidity | Wrinkle defects (1 hr) | Wrinkle defects (2 hrs) |
| Example 6 | 577 | 0.89 | 45 | 84 | 7.4 | B | A | A | A | B |
| Example 7 | 576 | 0.88 | 50 | 82 | 7.5 | B | A | A | B | B |
| Example 24 | 576 | 0.88 | 52 | 82 | 7.5 | B | A | A | A | B |
| Example 25 | 576 | 0.88 | 50 | 83 | 7.4 | B | A | A | A | B |
| Example 26 | 577 | 0.87 | 45 | 83 | 7.4 | B | A | A | A | B |
| Example 27 | 577 | 0.88 | 51 | 84 | 7.4 | B | A | A | A | B |
| Example 28 | 576 | 0.88 | 50 | 82 | 7.5 | B | A | A | B | B |
| Comparative Example 4 | 576 | 0.88 | 55 | 82 | 7.5 | C | B | A | B | B |
| Comparative Example 5 | 577 | 0.87 | 57 | 82 | 7.5 | C | B | A | A | B |
| Example 29 | 576 | 0.80 | 59 | 82 | 7.5 | B | A | A | A | A |
| Example 30 | 576 | 0.77 | 69 | 83 | 7.4 | B | B | A | A | A |
| Example 31 | 576 | 0.87 | 52 | 82 | 7.5 | B | A | A | A | B |
| Example 32 | 576 | 0.87 | 50 | 83 | 7.4 | B | A | A | A | B |
| Example 33 | 577 | 0.87 | 45 | 83 | 7.4 | B | A | A | A | B |
| Example 34 | 576 | 0.87 | 52 | 83 | 7.4 | B | A | A | A | B |

[Table 8-2]

| No. | Yield (%) | Adhesion | Vickers hardness | Contact angle (°) | SP value difference | ⊿ HAZE |
|---|---|---|---|---|---|---|
| Example 6 | 75 | 100 | 4.5 | 52 | 0.3 | 0.4 |
| Example 7 | 75 | 100 | 4.9 | 52 | 0.3 | 0.4 |
| Example 24 | 90 | 100 | 5.0 | 50 | 0.3 | 0.2 |
| Example 25 | 90 | 100 | 4.9 | 52 | 0.3 | 0.2 |
| Example 26 | 90 | 100 | 4.6 | 52 | 0.3 | 0.3 |
| Example 27 | 90 | 100 | 5.0 | 52 | 0.3 | 0.2 |
| Example 28 | 70 | 100 | 4.6 | 52 | 0.3 | 0.6 |
| Comparative Example 4 | 70 | 100 | 4.9 | 52 | 0.3 | 0.4 |
| Comparative Example 5 | 80 | 100 | 4.9 | 52 | 0.3 | 0.2 |
| Example 29 | 80 | 98 | 5.1 | 52 | 0.3 | 0.2 |
| Example 30 | 75 | 95 | 5.8 | 52 | 0.3 | 0.2 |
| Example 31 | 80 | 100 | 5.0 | 50 | 0.3 | 0.2 |
| Example 32 | 80 | 100 | 4.9 | 52 | 0.3 | 0.2 |
| Example 33 | 80 | 100 | 4.6 | 52 | 0.3 | 0.3 |
| Example 34 | 80 | 100 | 5.1 | 52 | 0.3 | 0.2 |

Explanation of letters and numerals:

1: Polyrotaxane
2: Axial molecule
3: Cyclic molecule
4: Bulky terminal group
5: Side chain

**Claims**

**1.** A photochromic curable composition comprising:

(A1) a first hindered amine compound having at least one reactive group selected from the group consisting of a radically polymerizable group and a group reactive with a radically polymerizable group,
(B) a radically polymerizable monomer comprising a polyrotaxane component (B1) having a radically polymerizable group while not having a piperidyl group, and
(C) a photochromic compound.

**2.** The photochromic curable composition according to claim 1, comprising 0.1 parts by mass or more and 5.0 parts by mass or less of the first hindered amine compound (A1) relative to 100 parts by mass of the radically polymerizable monomer component (B).

**3.** The photochromic curable composition according to claim 1 or 2, wherein a ratio M1/M2 of mass M1 of the polyrotaxane component (B1) to mass M2 of the first hindered amine compound (A1) is 0.1 or more and 40 or less.

**4.** The photochromic curable composition according to any one of claims 1 to 3, wherein the first hindered amine

compound (A1) comprises a compound represented by a formula (X) below:

[CF 1]

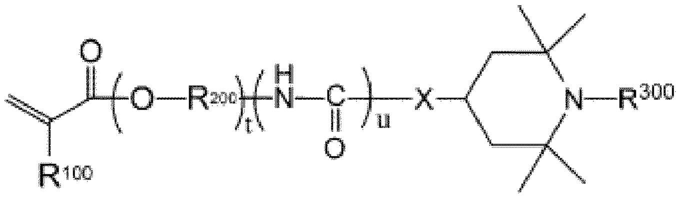

(X)

in the formula (X),

$R^{100}$ and $R^{300}$ are each a hydrogen atom or a methyl group,
X is a group represented by a formula (Z) below,
$R^{200}$ is an alkylene group having 1 to 5 carbon atoms,
t is a number from 0 to 20 on average, and
u is a number from 0 to 20 on average,

[CF 2]

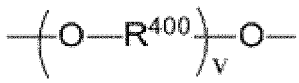

(Z)

in the formula (Z),

$R^{400}$ is an alkylene group having 1 to 20 carbon atoms, and
v is a number from 0 to 20 on average.

5. The photochromic curable composition according to any one of claims 1 to 4, wherein the content of the polyrotaxane component (B1) in the radically polymerizable monomer component (B) is 0.1% by mass or more and 50% by mass or less.

6. The photochromic curable composition according to any one of claims 1 to 5, wherein the radically polymerizable monomer component (B) further comprises silsesquioxane (B2) having a bifunctional or polyfunctional (meth)acryloyl group.

7. The photochromic curable composition according to any one of claims 1 to 6, further comprising a leveling agent.

8. The photochromic curable composition according to any one of claims 1 to 7, further comprising a second hindered amine compound (A2) that has no reactive group.

9. The photochromic curable composition according to any one of claims 1 to 8, wherein the second hindered amine compound (A2) comprises a compound represented by a formula (Y) below:

[CF 3]

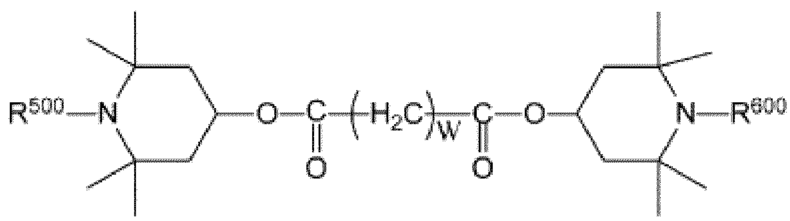

(Y)

in the formula (Y),

$R^{500}$ and $R^{600}$ are each a hydrogen atom or a methyl group, and
W is an integer from 1 to 50.

**10.** The photochromic curable composition according to any one of claims 1 to 9, further comprising an organic compound (D) having a boiling point of 80°C or higher and 200°C or lower, and a SP value of 8.0 to 10.0.

**11.** The photochromic curable composition according to any one of claims 1 to 10, comprising 0.10 parts by mass or more and 10.0 parts by mass or less of the organic compound (D) relative to 100 parts by mass of the radically polymerizable monomer component (B).

**12.** A photochromic laminate comprising:

an optical substrate,
a photochromic resin layer that is a cured product of the photochromic curable composition according to any one of claims 1 to 11, and
a polyurethane resin layer disposed between the optical substrate and the photochromic resin layer.

Fig. 1

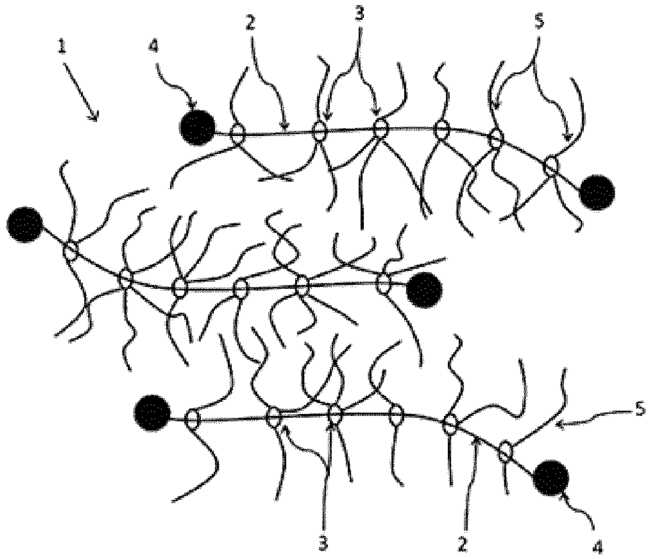

## INTERNATIONAL SEARCH REPORT

International application No.
**PCT/JP2022/009858**

**A. CLASSIFICATION OF SUBJECT MATTER**

***B32B 27/40***(2006.01)i; ***C08F 290/00***(2006.01)i; ***C08F 290/14***(2006.01)i; ***C09K 9/02***(2006.01)i; ***G02C 7/10***(2006.01)i; ***C09D 183/07***(2006.01)i; ***C08F 2/44***(2006.01)i; ***C09D 7/63***(2018.01)i; ***B32B 7/023***(2019.01)i; ***G02B 5/23***(2006.01)i
FI: G02B5/23; C08F2/44 B; C09K9/02 B; C08F2/44 Z; C08F290/14; B32B7/023; B32B27/40; C09D183/07; C09D7/63; C08F290/00; G02C7/10

According to International Patent Classification (IPC) or to both national classification and IPC

**B. FIELDS SEARCHED**

Minimum documentation searched (classification system followed by classification symbols)

B32B27/40; C08F290/00; C08F290/14; C09K9/02; G02C7/10; C09D183/07; C08F2/44; C09D7/63; B32B7/023; G02B5/23

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
|---|---|---|
| Y<br>A | JP 3016533 B2 (TOKUYAMA CORPORATION) 24 December 1999 (1999-12-24) paragraphs [0006], [0010], [0074], [0095], [0111] | 1-5, 7, 10, 12<br>6, 8-9, 11 |
| Y<br>A | WO 2019/221249 A1 (TOKUYAMA CORPORATION) 21 November 2019 (2019-11-21) paragraphs [0015]-[0018], fig. 1 | 1-5, 7, 10, 12<br>6, 8-9, 11 |
| A | JP 2016-132696 A (TOKUYAMA CORPORATION) 25 July 2016 (2016-07-25) paragraphs [0034], [0224], [0226] | 1-12 |
| A | WO 2012/133749 A1 (HOYA CORPORATION) 04 October 2012 (2012-10-04) paragraphs [0008]-[0009], [0020] | 1-12 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **06 May 2022** | **24 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/009858**

| Patent document cited in search report | Publication date (day/month/year) | Patent family member(s) | Publication date (day/month/year) |
|---|---|---|---|
| JP 3016533 B2 | 24 December 1999 | US 5462698 A<br>column 1, line 44 to column 2, line 1, column 2, lines 41-45, column 10, lines 51-57, column 15, column 19, lines 19-22<br>EP 619358 A1<br>AU 6463294 A<br>ES 2105102 T<br>AU 669624 B | |
| WO 2019/221249 A1 | 21 November 2019 | US 2021/0122874 A1<br>paragraphs [0016]-[0024]<br>EP 3795608 A<br>CN 112105676 A<br>KR 10-2021-0010455 A<br>SG 11202011161Q A<br>TW 202006012 A | |
| JP 2016-132696 A | 25 July 2016 | (Family: none) | |
| WO 2012/133749 A1 | 04 October 2012 | US 8902487 B2<br>column 2, lines 48-676, column 5, lines 47-57<br>EP 2693261 A1<br>AU 2012233367 A<br>CN 103443694 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2012176439 A
- WO 2013099640 A
- WO 2015068798 A
- WO 2011125956 A
- WO 2013058218 A
- JP 2004143449 A
- JP 11029640 A
- JP H0228154 A
- JP 62288830 A
- WO 9422850 A
- WO 9614596 A
- WO 2000015630 A
- WO 2004041961 A
- WO 2009146509 A
- WO 2012149599 A
- WO 2012162725 A
- WO 2013078086 A
- WO 2019013249 A
- WO 2019203205 A
- WO 2018030257 A


### Non-patent literature cited in the description


- Handbook of Chemistry Applied Edition. Chemical Society of Japan, 1973
- Polymer Handbook. 1998